(19) Europäisches Patentamt
European Patent Office
Office européen des brevets

(11) EP 2 963 079 A1

(12) EUROPEAN PATENT APPLICATION
published in accordance with Art. 153(4) EPC

(43) Date of publication:
06.01.2016 Bulletin 2016/01

(21) Application number: 14757784.5

(22) Date of filing: 28.02.2014

(51) Int Cl.:
*C08J 5/18* (2006.01) *B29C 41/24* (2006.01)
*B29C 59/00* (2006.01) *B32B 3/12* (2006.01)
*B32B 3/30* (2006.01) *C08L 101/00* (2006.01)
*B29L 7/00* (2006.01)

(86) International application number:
PCT/JP2014/055077

(87) International publication number:
WO 2014/133136 (04.09.2014 Gazette 2014/36)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 01.03.2013 JP 2013041087
24.07.2013 JP 2013153652

(71) Applicant: Fujifilm Corporation
Minato-ku
Tokyo 106-8620 (JP)

(72) Inventors:
- ITO Koju
Ashigarakami-gun
Kanagawa 258-8577 (JP)
- KOHASHI Souichi
Ashigarakami-gun
Kanagawa 258-8577 (JP)
- YABU Hiroshi
Sendai-shi
Miyagi 980-8577 (JP)
- SAITO Yuta
Sendai-shi
Miyagi 980-8577 (JP)

(74) Representative: Hoffmann Eitle
Patent- und Rechtsanwälte PartmbB
Arabellastraße 30
81925 München (DE)

# (54) FILM, AND MANUFACTURING METHOD THEREFOR, COMPOSITE, FILM LAMINATE, AND ETCHING METHOD

(57) Film, which has a fine structure and is adhered to various materials in an easy and strong manner without an adhesive agent, and a composite structure, film laminate, producing method and etching method, are provided.

Solution in which a hydrophobic high molecular compound and a catechol group-containing compound are dissolved in solvent is cast, to form cast film (24). Dew is condensed on an uncovered surface of the cast film (24). The solvent and water droplets upon the condensation are evaporated from the cast film (24), to produce porous film (11). The porous film (11) has a honeycomb structure in which plural pores (12) are formed in one film surface. The pores (12) are in a substantially equal shape and size, and are arranged regularly at a constant pitch. The film surface on a side having the pores (12) of the porous film (11) is a functional surface (13) having an adhesive property.

FIG. 4

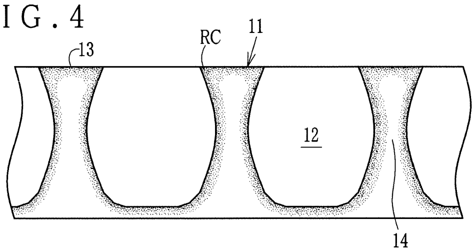


EP 2 963 079 A1

## Description

TECHNICAL FIELD

The present invention relates to film, and producing method for the same, composite structure, film laminate and etching method.

BACKGROUND ART

In fields of optical materials and electronic materials, various requirements have become more and more important, including an increase in the degree of integration, an increase in the density of an amount of information, an increase in the high precision of image information, and the like. Thus, techniques (fine patterning) for forming a fine structure on a surface of various materials in a more uniform manner have been demanded in those fields.

A known example of a method of the fine patterning is disclosed in JP-A 2011-173335. In this method, a porous surface of porous film having the porous surface where a great number of fine pores of the μm scale are formed is attached by adhesion to a flat base plate as a raw material. The base plate is patterned by processing of etching the same. An example of the porous film is the porous film of a honeycomb structure. Among films with a fine structure, there is a pillar film disclosed in JP-A 2009-293019 in addition to the porous film. The porous film of the honeycomb structure has fine pores formed in arrangement of a bee hive. The pillar film has plural projections formed on one film surface and regularly arranged at a constant pitch.

As a producing method for the porous film, JP-A 2011-173335 discloses a method of forming cast film by casting solution of a predetermined high molecular compound, and drying the cast film by condensation of dew on the cast film. In this method, a great number of fine pores of the μm scale are formed in the cast film for obtaining the honeycomb structure. In the method disclosed in JP-A 2011-173335, a hydrophobic high molecular compound and an amphipathic high molecular compound are dissolved in organic solvent for regularizing a shape and diameter of the pores as highly as possible. The cast film is formed from the solution, so that the condensation and drying are performed in a predetermined condition.

SUMMARY OF INVENTION

Problems to Be Solved by The Invention

However, even though a coating of an adhesive agent is applied for adhesion of the porous film to the base plate, the porous surface of the porous film and a film surface of the pillar film having the projections are likely to repel the adhesive agent of a liquid phase due to their structure. As porosity of the porous surface of the porous film is high, an area of adhesion to the base plate cannot be ensured sufficiently. It is very likely that the porous surface of the porous film cannot be adhered to the base plate with sufficient strength even by use of the adhesive agent.

There occurs a problem in incidental peeling of the porous film from the base plate or incidental partial rise of the porous film from the base plate at the time of etching, due to insufficient adhesive strength between the porous surface of the porous film and the base plate. A problem arises in that the base plate of the fine structure as a purpose cannot be obtained stably. There is an advantage in wet etching disclosed in JP-A 2011-173335 among plural methods of etching, because of a relatively low cost. However, the above-described problems arise remarkably seriously in relation to the processing of the wet etching.

The additional step of providing the adhesive agent between the porous film and the base plate is a factor of lowering productivity in the fine patterning or factor of increasing the cost.

An object of the present invention is to provide film, having a fine structure and including a surface for adhesion to various materials in an easy and strong manner without use of an adhesive agent, and a producing method for the same. Also, an object of the present invention is to provide a composite structure, film laminate obtained by laminating the film, and etching method performed by use of the film.

Means for Solving the Problems

Film of the present invention includes plural pores or plural projections formed equally with one another in a shape and size, and arranged regularly at a constant pitch on a film surface, and contains a hydrophobic high molecular compound, and a catechol group-containing compound being amphipathic and high molecular and containing a catechol group.

Preferably, the catechol group-containing compound is contained at an increasing amount in a direction toward the film surface where the pores or the projections are formed.

Preferably, the catechol group-containing compound is polymer. The polymer is obtained by polymerization of a first compound from which a first homopolymer containing a catechol group is producible and a second compound from which a second homopolymer without a catechol group is producible. The polymer contains a catechol group-containing portion of a series of plural first repeating units of the first homopolymer, and a catechol group-free portion of a series of plural second repeating units of the second homopolymer. Preferably, the polymer is copolymer of the catechol group-containing portion and the catechol group-free portion. Preferably, the first repeating units have a structure of a formula (1) below, and the second repeating units have a structure of a formula (2) below.

[Chemical 12]

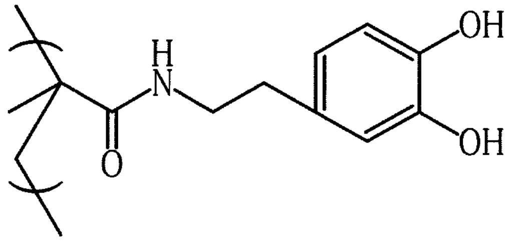

... formula (1)

[Chemical 13]

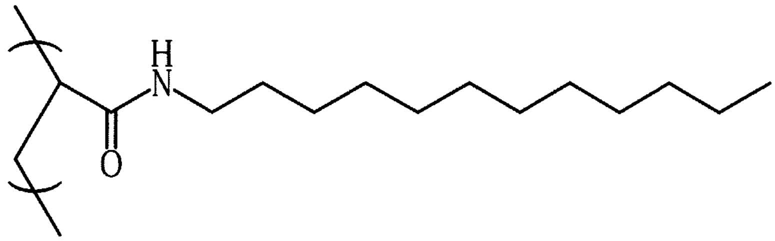

... formula (2)

Preferably, a ratio n/(m+n) is in a range equal to or more than 0.01 and equal to or less than 0.8, where n is a number of the first repeating units in the catechol group-containing portion, and m is a number of the second repeating units in the catechol group-free portion.

Preferably, an amount of the catechol group-containing compound is in a range equal to or more than 0.1 part by mass and equal to or less than 50 parts by mass with reference to 100 parts by mass of the hydrophobic high molecular compound. Preferably, the hydrophobic high molecular compound is polystyrene, polycarbonate, polymethyl methacrylate, polybutadiene or cellulose triacetate.

A composite structure of the present invention includes film and a substrate material, the film including plural pores or plural projections formed equally with one another in a shape and size, and arranged regularly at a constant pitch on a film surface, and containing a hydrophobic high molecular compound and a catechol group-containing compound being amphipathic and high molecular and containing a catechol group, the substrate material having a more smooth surface than the film surface having the pores or the projections with unevenness, and overlaid on the film by fitting the surface on the film surface.

A film laminate of the present invention includes first film and second film, the first and second films including plural pores or plural projections formed equally with one another in a shape and size, and arranged regularly at a constant pitch on a film surface, and containing a hydrophobic high molecular compound and a catechol group-containing compound being amphipathic and high molecular and containing a catechol group, wherein the second film is overlaid on the film surface of the first film having the pores or the projections.

A producing method of producing film, which includes plural pores or plural projections formed equally with one another in a shape and size, and arranged regularly at a constant pitch on a film surface, includes a casting step, condensation step and evaporating step. In the casting step, solution is cast on a support to form cast film, the solution containing a hydrophobic high molecular compound and a catechol group-containing compound dissolved in solvent, the catechol group-containing compound being amphipathic and high molecular and containing a catechol group. In the condensation step, condensation is performed on the cast film. In the evaporating step, the solvent and water droplets created by the condensation are evaporated from the cast film, to form the plural pores or the plural projections.

An etching method of the present invention includes an adhesion step (step A), recess forming step (step B)

and film removing step (step C). In the step A, film is adhered to a substrate material to be etched to obtain a composite structure, wherein the film includes plural pores or plural projections formed equally with one another in a shape and size, and arranged regularly at a constant pitch on a film surface, the film contains a hydrophobic high molecular compound and a catechol group-containing compound being amphipathic and high molecular and containing a catechol group, the substrate material has a more smooth surface than the film surface having the pores or the projections with unevenness, and the film is overlaid on the substrate material by fitting the surface on the film surface. In the step B, etchant for the substrate material is caused to contact the composite structure from a side of the film, to form a recess in the substrate material. In the step C, the film in the composite structure is melted or dissolved after the step B, to remove the film.

In the etching method, preferably, the film includes the pores formed in the film surface without penetration in a thickness direction. Pore walls defined between the plural pores are cut along the film surface between the step A and the step B, to remove a film portion of the film inclusive of a film surface opposite to the film surface.

In the etching method, preferably, the film includes the projections formed on the film surface. The projections are cut along the film surface between the step A and the step B, to remove a film portion of the film inclusive of a film surface opposite to the film surface.

Effect of the Invention

According to the present invention, easy and strong adhesion is possible to various materials without an adhesive agent owing to the fine structure. According to the film producing method of the present invention, it is possible to obtain film with which easy and strong adhesion is possible to various materials without an adhesive agent owing to the fine structure. According to the a composite structure, film laminate and etching method of the present invention, an etched product processed by fine patterning meeting a purpose can be obtained.

BRIEF DESCRIPTION OF DRAWINGS

Fig. 1 is a plan of porous film of a first embodiment;
Fig. 2 is a section taken on line II-II in Fig. 1;
Fig. 3 is a section taken on line III-III in Fig. 1;
Fig. 4 is an explanatory view illustrating a distribution of a catechol group-containing compound;
Fig. 5 is an explanatory view illustrating distribution of the catechol group-containing compound in porous film of a second embodiment;
Fig. 6 is a schematic view of a production system for producing the porous film of the first embodiment;
Fig. 7 is an explanatory view of a peel roller for use in the production system of Fig. 6;
Fig. 8 is a first section of porous film of a third embodiment;
Fig. 9 is a second section of the porous film of the third embodiment;
Fig. 10 is a first section of porous film of a fourth embodiment;
Fig. 11 is a second section of the porous film of the fourth embodiment;
Fig. 12 is a first section of porous film of a fifth embodiment;
Fig. 13 is a second section of the porous film of the fifth embodiment;
Fig. 14 is a plan of multi-pillar film of a sixth embodiment;
Fig. 15 is a section taken on line XV-XV in Fig. 14;
Fig. 16 is a section taken on line XVI-XVI in Fig. 14;
Fig. 17 is a section of a composite structure of a seventh embodiment;
Fig. 18 is a section of a composite structure of an eighth embodiment;
Fig. 19 is an explanatory view related to a producing method for the composite structure of the eighth embodiment;
Fig. 20 is a section of a composite structure of a ninth embodiment;
Fig. 21 is a section of a composite structure of a tenth embodiment;
Fig. 22 is a section of a composite structure of an eleventh embodiment;
Fig. 23 is an explanatory view in relation to a working (etching) method for a base plate;
Fig. 24 is a plan of a product substrate obtained by the working method of the base plate;
Fig. 25 is a section of a film laminate of a twelfth embodiment;
Fig. 26 is a section of a film laminate of a thirteenth embodiment;
Fig. 27 is a section of a film laminate of a fourteenth embodiment;
Fig. 28 is an explanatory view of a synthesis method for the catechol group-containing compound;
Fig. 29 is an NMR chart of the catechol group-containing compound.

MODE FOR CARRYING OUT THE INVENTION

Porous film 11 of a first embodiment, as illustrated in Fig. 1, is a honeycomb structure (structure of a bee hive) of porous film having plural pores 12 on one film surface. The pores 12 are equal to one another in their shape and size, and are arranged regularly at a predetermined pitch. As illustrated in Figs. 2 and 3, the pores 12 do not penetrate in the porous film 11 in its thickness direction, but are recesses in the film surface on one side. The film surface of the porous film 11 having the pores 12 has a function of adhesion which will be described later. Thus, this film surface is referred to as a functional surface 13 in the description below. There is no communication between the pores 12 within the porous film 11. Pore walls 14 are so defined that the pores 12 are discrete from one another.

In the following description, let an open diameter AP be an open diameter in the functional surface 13 or a diameter of the pores 12 defined by viewing the porous film 11 in a direction of a normal line of the functional surface 13. Let a pore diameter D be a maximum diameter of the pores 12. Let a center-to-center distance L1 be a distance between centers of the adjacent pores 12. Let a base thickness T1 be a thickness of the porous film at a base of the pores 12, namely a minimum thickness of the porous film. Let a pore depth L2 be a depth of the pores 12. Let a pore distance L3 be a distance between the adjacent pores 12 in the functional surface 13. A reference sign TA is assigned to the thickness of the porous film 11. A reference sign TP is assigned to the thickness of the pore walls 14 between the pores 12.

The open diameter AP is in a range equal to or more than 10 nm and equal to or less than 100 $\mu$m. Fine patterning by use of the porous film 11, to be described later, can produce a fine structure on a base plate in a range equal to or more than 10 nm and equal to or less than 100 $\mu$m. The open diameter AP in the porous film 11 is constant in the same range. It is possible to regularize the fine structure formed on the base plate.

Being constant in the open diameter AP means that a coefficient of variation of the open diameter is at most 10 %, namely, in a range equal to or more than 0 % and equal to or less than 10 %. The coefficient of variation of the open diameter is obtained by a method as follows. At first, s adjacent areas of 1 mm x 1 mm (s is a natural number) are defined as viewed on a plane in a given direction. Averages of the open diameter AP in respectively the areas are obtained. Let the averages be APS (1), APS(2), ..., APS(s-1) and APS(s). An average APA of those averages is obtained in a formula of {APS(1) + APS(2) + ... + APS(s-1) + APS(s)}/s. The coefficient of variation of the open diameter in the first area having the average value APS(1) is obtained as 100 x |APS(1)-APA|/APA. Namely, the coefficient of variation of the open diameter is a value obtained per each area of 1 mm x 1 mm. The coefficient of variation of the open diameter in an sth area having the average value APS (s) is obtained as 100 x |APS(s)-APA|/APA.

Note that the pore diameter D is set constant in a predetermined range. Thus, the above-described effect according to the constant property of the open diameter AP is enhanced.

Being constant in the pore diameter D means that a coefficient of variation of the pore diameter is at most 10 %, namely, in a range equal to or more than 0 % and equal to or less than 10 %. A method of obtaining the coefficient of variation of the pore diameter is the method of obtaining the coefficient of variation of the open diameter described above but in which the open diameter AP is replaced with the pore diameter D. The method is as follows. At first, averages of the pore diameter D in respectively the above-defined areas are obtained. Let the averages be DS(1), DS(2), ..., DS(s-1) and DS(s). An average DSA of those averages is obtained in a formula of {DS(1) + DS (2) + ... + DS(s-1) + DS (s)}/s. The coefficient of variation of the pore diameter in the first area having the average value DS(1) is obtained as 100 x |DS(1) -DSA|/DSA. The coefficient of variation of the pore diameter in an sth area having the average value DS (s) is obtained as 100 x |DS(s)-DSA|/DSA.

Being equal in the shape and size means that each one of a coefficient of variation of the shape of the pores 12 and a coefficient of variation of the pore diameter of the pores 12 is at most 10 %, namely, in a range equal to or more than 0 % and equal to or less than 10 %. The coefficient of variation of the shape of the pores is obtained by a method as follows. Averages of differences SP (sphericity) of the shapes of the pores 12 from spheres are obtained in respectively the areas divided in the above manner. Let the averages be SPS(1), SPS(2), ..., SPS(s-1) and SPS(s). Note that the differences SP (sphericity) of the shapes from the spheres are a parameter as a difference in radii of a smallest externally tangential sphere and a largest internally tangential sphere defined around a center of a sphere of the least mean square of a surface constituting the pore. An average SPA of those averages is obtained in a formula of {SPS(1) + SPS(2) + ... + SPS(s-1) + SPS(s)}/s. The coefficient of variation of the shape of the pore in the first area having the average value SPS(1) is obtained as 100 x |SPS(1)-SPA|/SPA. Namely, the coefficient of variation of the shape of the pore is a value obtained per each area of 1 mm x 1 mm. The coefficient of variation of the shape of the pore in an sth area having the average value SPS(s) is obtained as 100 x |SPS(s)-SPA|/SPA.

The regular arrangement at the constant pitch means that a coefficient of variation of the center-to-center distance L1 is at most 10 %, namely, in a range equal to or more than 0 % and equal to or less than 10 %. The coefficient of variation of the center-to-center distance L1 is obtained by a method as follows. Averages of the center-to-center distance L1 are obtained in respectively the areas divided in the above manner. Let the averages be L1S(1), L1S(2), ..., L1S(s-1) and L1S(s). An average L1A of those averages is obtained in a formula of {L1S(1) + L1S(2) + ... + L1S(s-1) +

L1S(s)}/s. The coefficient of variation of the center-to-center distance L1 in the first area having the average value L1S(1) is obtained as 100 x |L1S(1)-L1A|/L1A. Namely, the coefficient of variation of the center-to-center distance L1 is a value obtained per each area of 1 mm x 1 mm. The coefficient of variation of the center-to-center distance L1 in an sth area having the average value L1S(s) is obtained as 100 x |L1S(s)-L1A|/L1A.

In the structure of the porous film 11 where the pores 12 are formed in one side of the functional surface 13 as recesses, the pore diameter D is larger than the open diameter AP. Thus, a thickness TP of the pore walls 14 gradually decreases toward the inside from the functional surface 13 and the remaining film surface. The center-to-center distance L1 is larger than the pore diameter D.

The depth L2, the base thickness T1 and high or low pore density in arranging the pores 12 are controlled according to time from starting generating water droplets until evaporating the water droplets, speed and time for evaporating the solvent, density of a solid component in the solution to be cast, in the producing method later to be described.

There is dependency of a size of the pores 12 determined by the open diameter AP, pore diameter D and the like upon the thickness TA. Forming the pores 12 with small values of the open diameter AP and pore diameter D is enabled by producing the porous film 11 with a small thickness TA. Forming the pores 12 in a large form is enabled by producing the porous film 11 with a large thickness TA.

The porous film 11 is constituted by the hydrophobic high molecular compound and the amphipathic high molecular compound having a catechol group (hereinafter referred to as catechol group-containing compound). The porous film 11 being produced by the producing method later to be described, the catechol group-containing compound is locally present within the porous film 11 with an amount increasing toward a peripheral portion around the pores 12 and toward the functional surface 13. Specifically, the catechol group-containing compound is present with an increase toward a side surface of the pore walls 14 between the pores 12 and toward an upper surface of the pore walls 14 in Figs. 2 and 3 constituting the functional surface 13. The catechol group contained in the catechol group-containing compound causes the functional surface 13 to adhere to a substrate material of various raw materials.

A state of local presence of the catechol group-containing compound can be observed by a method as follows. At first, the porous film 11 is cut on a plane transverse to the functional surface 13 (for example, perpendicular plane), to form a sectional surface. Then the catechol group-containing compound present on the sectional surface is dyed by a dying process. It is possible in the dying process to use a method similar to the dying process for use in an amphipathic compound in general. Thus, the catechol group-containing compound and its state of distribution are rendered visible as illustrated in Fig. 4. In the porous film 11 where the catechol group-containing compound is rendered visible, portions having the catechol group-containing compound are observed as colored portions RC. Density of the catechol group-containing compound is higher according to highness in the density of their color in the indication. As illustrated in Fig. 4, the color comes to have higher density in a direction toward the functional surface 13 and the pores 12. Note that a sequence of cutting and dying can be reverse to the above-described sequence. A reason for the local presence of the catechol group-containing compound will be described in description of a producing method.

In porous film 16 of a second embodiment of which the base thickness T1 is large, the catechol group-containing compound is present in a more remarkably local manner, as illustrated in Fig. 5. On a section of the porous film 16 after dying, density of the color increases toward the functional surface 13 and toward the pores 12 conspicuously.

The catechol group-containing compound may be any compound having a catechol group for providing the functional surface 13 with an adhesive function and amphipathicity for causing self-organization of a hydrophobic high molecular compound with water droplets. For example, the catechol group-containing compound is obtained by polymerization (copolymerization) of first and second compounds different from one another. The catechol group-containing compound is described hereinafter as a compound obtained from this polymerization.

The first compound used for obtaining the catechol group-containing compound is a substance containing a catechol group capable of producing a first homopolymer of a series of plural first repeating units by polymerization. The first homopolymer has a structure of the series of the plural first repeating units having the catechol group.

An example of the first compound is one containing a catechol group and having a carbon-carbon double bond in a portion other than the catechol group. Homopolymerization of the first compound produces a carbon-carbon single bond with another molecule of the first compound by contribution of the carbon-carbon double bond. A first repeating unit is obtained from a single bond from a portion of the carbon-carbon double bond contributing to the polymerization. A first homopolymer is obtained in a structure with a series of the first repeating units by the carbon-carbon single bond produced by the polymerization.

In contrast, the second compound for use to obtain the catechol group-containing compound is a substance from which a second homopolymer in a series of second repeating units is producible by polymerization, and does not have a catechol group. The second compound sufficiently has amphipathicity of the catechol group-containing compound obtained by polymerization with the first compound having a catechol group. As the catechol group is hydrophilic, the second compound has at least a hydrophobic portion. Thus, the second homopolymer has at least a hydrophobic portion. The second compound may have a hydrophilic portion. So the second homopolymer is amphipathic because of the hydrophilic portion in addition to the hydrophobic portion. Examples of structures of the second homopolymer having

the hydrophobic and hydrophilic portions include a structure having a main chain as a hydrophobic portion and a hydrophilic group as a hydrophilic portion, and a structure having a hydrophilic group as a hydrophilic portion at an end of a main chain as a hydrophobic portion.

An example of the second compound is a compound having no catechol group, but having hydrophilic and hydrophobic portions, and having a carbon-carbon double bond. Homopolymerization of the second compound forms a carbon-carbon single bond with another molecule of the second compound by contribution of a carbon-carbon double bond to the polymerization. A second repeating unit is obtained by forming a single bond from a portion of the carbon-carbon double bond contributing to the polymerization. A second homopolymer is obtained as a series of the second repeating units by the carbon-carbon single bond formed by the polymerization.

Note that a form of the homopolymerization of any one of the first and second compounds is not limited to that of contribution of a carbon-carbon double bond described above. For example, a carbon-carbon bond contributing to the homopolymerization can be a triple bond in any of the first and second compounds. The triple bond may change to a double bond in the homopolymerization, to form a carbon-carbon single bond with another molecule of the compound. For this structure, a portion of which a carbon-carbon triple bond contributing to the polymerization in the first and second compounds becomes respectively the first and second repeating units. The first and second homopolymers of series of the first and second repeating units are obtained owing to the carbon-carbon single bond formed by the polymerization.

It is also possible in any of the first and second compounds that a bond relevant to polymerization is a carbon-carbon bond of a ring form, and a carbon-carbon single bond is formed with another molecule of a compound by ring opening for the homopolymerization. For this structure, the first and second repeating units are constituted by ring opening at a portion of carbon-carbon relevant to the polymerization in the first and second compounds. The first and second homopolymers are obtained in the series of the first and second repeating units by the carbon-carbon single bond formed by ring opening.

The catechol group-containing compound is produced by polymerization of the first and second compounds described above. The catechol group-containing compound is a structure including a catechol group-containing portion of a series of a plurality of the first repeating units derived from the first compound and having a catechol group, and a catechol group-free portion of a series of a plurality of the second repeating units derived from the second compound and not having a catechol group. The catechol group-containing compound of this structure provides the porous film 11 with adhesive property to a substrate material of various materials according to the catechol group. Material with adhesive property can be produced from the catechol group-containing compound with both of the adhesive property and amphipathicity. Also, the catechol group-containing compound can be molded by control of the degree of polymerization and a molecular weight, to form various shapes as material with adhesive property.

Let n be a number of the first repeating units constituting the catechol group-containing portion in the catechol group-containing compound. Let m be a number of the second repeating units constituting the catechol group-free portion. A ratio $n/(m+n)$ is preferably in a range equal to or more than 0.01 and equal to or less than 0.8, and more preferably in a range equal to or more than 0.1 and equal to or less than 0.5. The ratio being equal to or more than 0.01 can provide sufficient adhesive property on the functional surface 13 in comparison with a structure with the ratio less than 0.01. The ratio being equal to or less than 0.8 facilitates uniform mixing of the catechol group-containing compound with the hydrophobic high molecular compound in comparison with a structure with the ratio more than 0.8.

A mass ratio of the catechol group-containing compound to the hydrophobic high molecular compound in the porous film 11 is preferably in a range equal to or more than 0.1 % and equal to or less than 50 %, and more preferably in a range equal to or more than 1 % and equal to or less than 10 %. The mass ratio being equal to or more than 0.1 % can obtain sufficient adhesive property in the presence of the catechol group-containing compound of a sufficient amount in the functional surface 13 in comparison with the mass ratio being less than 0.1 %. Also, the mass ratio being equal to or less than 50 % can facilitate production of the material of the adhesive property owing to easy mixing of the catechol group-containing compound with the hydrophobic high molecular compound in a uniform manner, in comparison with the mass ratio being more than 50 %. Note that the mass ratio of the catechol group-containing compound to the hydrophobic high molecular compound is a percentage expressed by $(X/Y).100$ (in the unit of %) where X is a mass of the catechol group-containing compound and Y is a mass of the hydrophobic high molecular compound.

An example of the first compound is dopamine methacrylamide (DMA) and the like. The first compound of the present embodiment is dopamine methacrylamide (DMA) expressed in the formula (3) below (molecular weight of approximately 207.2) . A method of producing DMA will be described later in a section of an example. Note that homopolymerization of DMA obtains a first homopolymer having a first repeating unit expressed in the formula (1) below.

[Chemical 3]

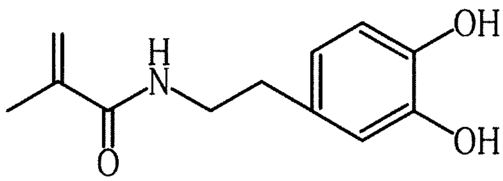

... formula (3)

[Chemical 4]

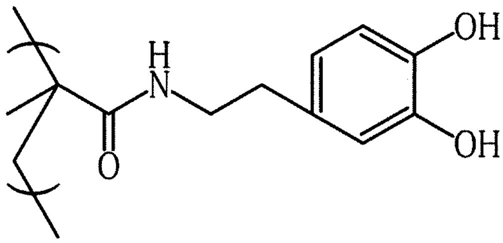

... formula (1)

DMA expressed in the formula (3) is a compound containing a catechol group, hydrocarbon chain with a carbon atomicity of 2, portion of an amide bond, portion of a carbon-carbon double bond and methyl group, in a series from a right side of the formula (3). The catechol group provides the adhesive property of the film of the present invention. The hydrocarbon chain has hydrophobicity. The portion of the amide bond has hydrophilicity. The carbon-carbon double bond is changed to a single bond by the polymerization, to form a carbon-carbon single bond together with another molecule of DMA or a molecule of the second compound. A portion of the carbon chain of the formed single bond, namely $-(CH-CH_2)-$, has hydrophobicity. The methyl group has hydrophobicity. In the repeating unit of the formula (1), only the portion of the carbon-carbon double bond contributing to the polymerization is a single bond in relation to the compound of the formula (3).

The second compound in the present embodiment is N-dodecyl acrylamide (DAA) expressed in the formula (4) below (molecular weight of approximately 239.4). Homopolymerization of DAA produces a second homopolymer having a second repeating unit expressed in the formula (2) below.

[Chemical 5]

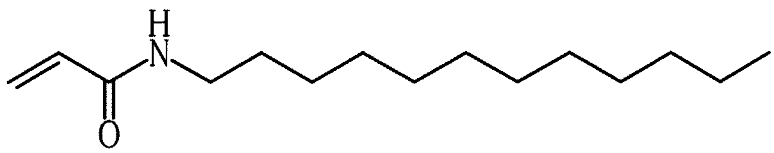

... formula (4)

[Chemical 6]

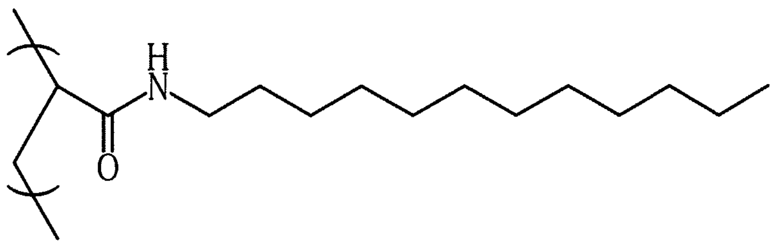

... formula (2)

DAA expressed in the formula (4) is a compound containing a hydrocarbon chain with a carbon atomicity of 12, portion of an amide bond, and portion of a carbon-carbon double bond, in a series from a right side of the formula (4). The hydrocarbon chain has hydrophobicity. The portion of the amide bond has hydrophilicity. Therefore, DAA has amphipathicity. The carbon-carbon double bond is changed to a single bond by the polymerization, to form a carbon-carbon single bond together with another molecule of DAA or a molecule of the first compound. A portion of the carbon chain of the formed single bond, namely $-(CH_2-CH_2)-$, has hydrophobicity. In the repeating unit of the formula (2), only the portion of the carbon-carbon double bond contributing to the polymerization is a single bond in relation to the compound of the formula (4).

The catechol group-containing compound formed from DMA and DAA is expressed in the formula (5) below, and contains a first group component of a series of plural repeating units derived from DMA as expressed in the formula (5-I) below, and a second group component of a series of plural repeating units derived from DAA as expressed in the formula (5-II) below. The first and second group components are bonded together by a single bond newly formed between carbons of a single bond formed after polymerization of the first and second compounds. The first group component corresponds to the catechol group-containing portion. The second group component corresponds to the catechol group-free portion. Accordingly, the catechol group-containing compound contains a catechol group for providing the functional surface 13 with an adhesive property, and has amphipathicity to encourage self-organization of the hydrophobic high molecular compound with droplets of water. n and m in the formula (5) correspond to the number n of the first repeating units constituting the catechol group-containing portion and the number m of the second repeating units constituting the catechol group-free portion.

[Chemical 7]

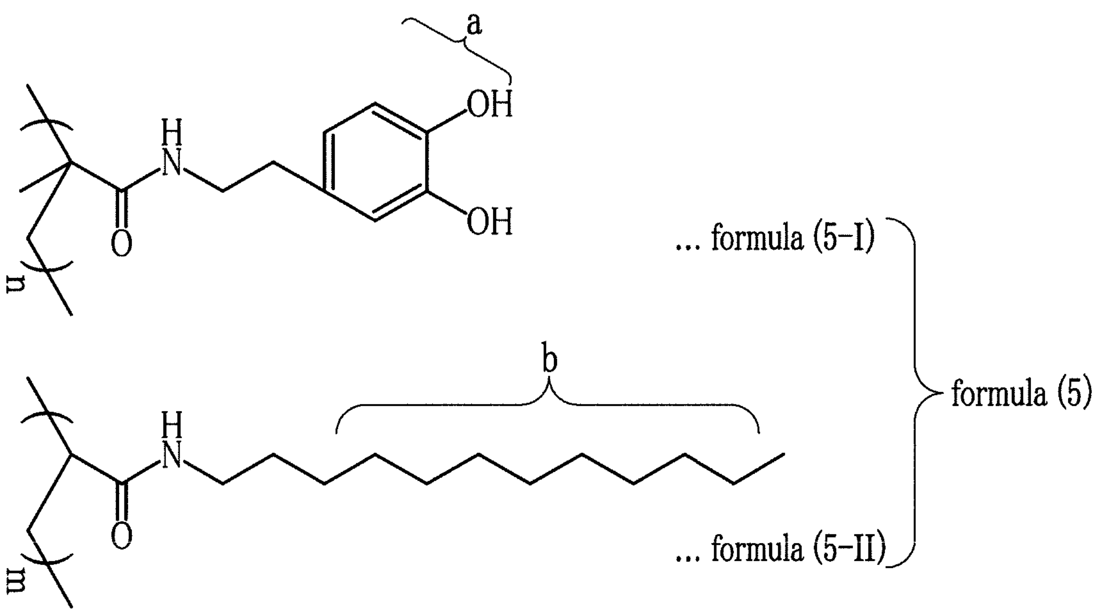

... formula (5-I)

... formula (5-II)

formula (5)

The catechol group-containing compound (poly(dopamine methacrylamide-co-N-dodecyl acrylamide), abbreviated as P(DMA-co-DAA)) expressed by the formula (5) can be obtained by dissolving DMA and DAA in solvent together with a radical initiator, and by performing radical polymerization. In the reaction, a molar ratio between DMA and DAA and an amount of the polymerization initiator are so determined that n and m of P (DMA-co-DAA) to be synthesized satisfies the above condition and that its molecular weight becomes in a range equal to or more than 10,000 and equal to or less than 1,000,000. The compounds are dissolved in solvent, and then polymerized at temperature equal to or higher than scission temperature of the polymerization initiator. Note that the solvent has a boiling point higher than the scission temperature of the polymerization initiator.

Preferable examples of the polymerization initiator in the radical polymerization of DMA and DAA are azoisobutyronitrile (2,2'-azo bis(2-methyl propionitrile), abbreviated as AIBN, $C_8H_{12}N_4$, molecular weight of approximately 160), and benzoyl peroxide (BPO). Specifically, AIBN is preferable among those. However, the polymerization initiator is not limited thereto.

[Chemical 8]

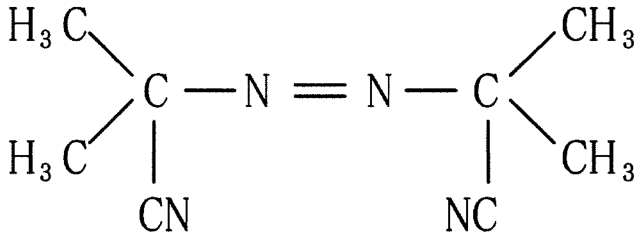

... formula (6)

A preferable solvent in the radical polymerization of DMA and DAA is a mixed solvent of dimethyl sulfoxide (abbreviated as DMSO, $(CH_3)_2SO$, molecular weight of approximately 78.1) and benzene. However, the solvent is not limited thereto.

Furthermore, the catechol group-containing compound can be produced by use of a third compound distinct from the first or second compound in addition to the first and second compounds. In short, the catechol group-containing compound may be polymer of the first, second and third compounds. Note that the third compound is used in a range not lowering the adhesive property with the catechol group in the first repeating unit.

In the porous film 11, a hydrophobic high molecular compound included together with the catechol group-containing compound expressed by the formula (5) is not limited particularly, but can be selected suitably for the purpose among well-known compounds. Examples are vinyl polymerized polymers (for example, polyethylene, polypropylene, polystyrene, polyacrylate, polymethacrylate, polyacrylamide, polymethacrylamide, poly vinyl chloride, polyvinylidene chloride, polyvinylidene fluoride, polyhexafluoropropene, poly vinyl ether, poly vinyl carbazole, poly vinyl acetate, poly vinyl carbazole, polytetrafluoethylene, and the like); polyesters (for example, polyethylene terephthalate, polyethylene naphthalate, polyethylene succinate, polybutylene succinate, polylactide, and the like); polylactones (for example, polycaprolactone and the like); polyamides or polyimides (for example, nylon, polyamide acid, and the like); polyurethane, polyurea, polybutadiene, polycarbonates, polyaromatics, polysulfones, polyether sulfones, polysiloxane derivatives, and cellulose acylates (triacetyl cellulose, cellulose acylate propionate, and cellulose acetate butyrate). Those can be homopolymer as required, and can be in a form of copolymer or polymer blend. Mixture of two or more of the polymers can be used as required. For use in the fine patterning, preferable examples are polystyrene, polycarbonate, polymethyl methacrylate, polybutadiene, triacetyl cellulose and the like.

In the porous film 11, the hydrophobic high molecular compound and the catechol group-containing compound can have a phase of a polymer blend or polymer alloy. Bonding between those is not limited. However, it is preferable to mix those in a method without phase separation in a larger size than the open diameter AP of pores to be formed while the solution for casting is produced or while the solution is cast to form the film. Therefore, the hydrophobic high molecular compound and a catechol group-free portion in the catechol group-containing compound preferably have affinity with one another. Should large phase separation be created, it is possible to use a compatibilizing agent for the purpose of increasing affinity between the hydrophobic high molecular compound and the catechol group-free portion in the catechol group-containing compound.

A method of preparing mixture of the hydrophobic high molecular compound and the catechol group-containing compound is not limited particularly. The following methods (1) to (3) can be examples.

(1) The first and second compounds as raw materials of the catechol group-containing compound are poured in solvent for polymerization. The hydrophobic high molecular compound is added to the solution and stirred at any one of time points before starting the polymerization, during the polymerization, and after terminating the polymerization. After the stirring, the solvent is removed.

(2) The catechol group-containing compound is added to solution in which the hydrophobic high molecular compound is dissolved, and stirred and mixed. Afterwards, the solvent is removed.

(3) The hydrophobic high molecular compound and the catechol group-containing compound are mixed by a well-known melt mixer.

The porous film 11 or 16 is produced in, for example, a porous film production system 21 as illustrated in Fig. 6. A producing method is described as an example for producing the porous film 11. As illustrated in Fig. 6, a film forming step, condensation step and evaporation step are performed in a casting chamber 26. In the film forming step, the catechol group-containing compound and the hydrophobic high molecular compound are dissolved in a solvent to obtain solution 23, which is cast on to a support to form cast film 24. In the condensation step, dew is condensed on the cast film 24 to form water droplets. In the evaporation step, the water droplets formed by the solvent and condensation are

evaporated from the cast film 24. The solvent gasified by the casting chamber 26 is collected by a collector (not shown) disposed outside the casting chamber 26. In the present embodiment, the casting chamber 26 of an integrated form for use has a first area 28 and a second area 29, the first area 28 being used for the casting step and the condensation step, and for evaporating the solvent by growing the condensed water droplets, the second area 29 evaporating the water droplets. However, it is possible to set a plurality of areas discrete from one another. Consequently, the cast film 24 is organized in the self-organization by passing the first and second areas 28 and 29 and becomes the porous film 11 having a predetermined condition of porosity.

A casting belt 31 for use as a support is connected to extend on rollers 32 and 33. A casting die 35 is disposed higher than the casting belt 31. At least one of the rollers 32 and 33 is rotated by a driving device which is not shown, to travel the casting belt 31 continuously. A temperature adjuster 37 adjusts temperature of the rollers 32 and 33, so that temperature of the casting belt 31 in contact with the rollers 32 and 33 is controlled.

In the first area 28, the solution 23 is caused to flow out of the casting die 35 on to the casting belt 31 which is run, to form the cast film 24 on the casting belt 31. An ejection exhaust unit 41 is disposed higher than a travel path of the cast film 24. The ejection exhaust unit 41 includes an ejection opening 41a for ejecting humid air near to the cast film 24 , and an exhaust opening 41b for suction and exhaust of gas around the cast film 24. Also, the ejection exhaust unit 41 has an air flow controller (not shown) for discretely controlling temperature, condensation point, humidity and flow rate of the air flow in an ejection system, and suction force in an exhaust system. A filter is provided in the ejection opening 41a for maintaining a dirt level, namely, cleanness of the humid air. It is possible to arrange a plurality of the ejection exhaust units 41 in a travel direction of the casting belt 31.

A plurality of ejection exhaust units 43 are arranged serially along the travel path of the cast film 24. In Fig. 6, two of the ejection exhaust units 43 are illustrated, but their number is not limited thereto. The ejection exhaust units 43 are constructed in the same manner as the ejection exhaust unit 41 described above, and have an ejection opening 43a and an exhaust opening 43b. The ejection exhaust units 43 are not limited thereto. One of the ejection exhaust units 43 disposed on the most upstream side is disposed immediately downstream of the ejection exhaust unit 41. This is for growing water droplets formed by the first area 28 in a uniform manner. Should one of the ejection exhaust units 43 on the most upstream side be distant from the ejection exhaust unit 41, a size of growth of water droplets may be non-uniform, namely according to a long period from forming the water droplets to the growth of the water droplets.

Let $\Delta T$ be a value of TD-TS where TD is a condensation point of the air flow, and TS is surface temperature of the cast film 24. For the cast film 24 passing directly under the vicinity of the ejection exhaust unit 41, at least one of the surface temperature TS and the condensation point TD of the air flow from the ejection opening 41a is controlled for $\Delta T$ to satisfy a condition of a mathematical formula (I) below. Should $\Delta T$ be 3 deg. C. or lower, occurrence of water droplets is difficult. Should $\Delta T$ be higher than 30 deg. C. , occurrence of water droplets is abrupt, so that water droplets may be irregularly formed, or arranged in a three-dimensionally without two-dimensional arrangement on a plane. Note that it is preferable in the first area 28 to change $\Delta T$ from a high value to a low value. Thus, it is possible to control a speed of creating water droplets and a size of those water droplets. Water droplets can be formed at a regular diameter two-dimensionally, or in a surface direction of the cast film 24.

$$3 \text{ deg. C.} \leq \Delta T \leq 30 \text{ deg. C.} \quad \ldots \text{(I)}$$

For the cast film 24 passing directly under the vicinity of the ejection exhaust units 43, at least one of the surface temperature TS and the condensation point TD of the air flow from the ejection opening 43a is controlled for $\Delta T$ to satisfy a condition of a mathematical formula (II) below. The control condition being set in this manner, water droplets are grown slowly to encourage arrangement of the water droplets with capillary force, to form the uniform water droplets at a high density. Should $\Delta T$ be 0 deg. C. or lower, growth of water droplets may be insufficient and may not be in the high density. A shape and size of the pores and arrangement of pores in the porous film are likely to be non-uniform. Should $\Delta T$ be higher than 10 deg. C. , water droplets may be formed in a locally multi-layer manner, namely, three-dimensionally, so that a shape and size of the pores and arrangement of the pores in the porous film are likely to be non-uniform.

$$0 \text{ deg. C.} < \Delta T \leq 10 \text{ deg. C.} \quad \ldots \text{(II)}$$

Note that it is preferable that the surface temperature TS of the cast film 24 passing directly under the vicinity of the ejection exhaust units 43 is substantially equal to the condensation point TD.

While water droplets are growing, it is preferable to evaporate as much solvent as possible from the cast film 24. For the cast film 24 passing directly under the vicinity of the ejection exhaust units 43, the surface temperature TS and the condensation point TD are controlled in the range of the mathematical formula (II) above, it is possible to

evaporate the solvent sufficiently, and prevent abrupt evaporation. Also, it is preferable selectively to evaporate only the solvent without evaporating the water droplets. Consequently, a preferable example of the solvent can be one with a higher evaporation speed than water droplets at an equal temperature and equal pressure. It is easier for the water droplets to enter the inside of the cast film 24 upon the evaporation of the solvent.

In the first area 28, the surface temperature TS of the cast film 24 is controlled by the casting belt 31 and a temperature control plate (not shown) disposed to face the casting belt 31. Also, the surface temperature TS can be controlled by either one of the casting belt 31 and the temperature control plate. The temperature control plate can change the temperature in a travel direction of the casting belt 31. The condensation point TD is controlled by controlling a condition of humid air supplied by the ejection opening 41a of the ejection exhaust unit 41 or the ejection opening 43a of the ejection exhaust units 43. Also, the surface temperature TS of the cast film 24 can be measured, for example, by a non-contact temperature measurement means disposed near to the cast film 24, for example, a commercially available thermometer of an infrared type.

In the second area 29, a plurality of ejection exhaust units 45 are arranged serially along the travel path of the cast film 24. In Fig. 6, four of the ejection exhaust units 45 are illustrated. However, the number of the ejection exhaust units 45 is not limited thereto. The ejection exhaust units 45 are structurally the same as the ejection exhaust unit 41 or 43, and include an ejection opening 45a and an exhaust opening 45b. However, the ejection exhaust units 45 are not limited thereto.

At least one of the surface temperature TS and the condensation point TD of the air flow from the ejection opening 45a is controlled in relation to the cast film 24 passing directly under the vicinity of the ejection exhaust units 45 for the surface temperature TS and the condensation point TD to satisfy a mathematical formula (III) below. The control of the surface temperature TS is performed mainly by a temperature control plate (not shown) in a manner similar to the first area 28. The control of the condensation point TD is performed by controlling a condition of dry air from the ejection opening 45a. Note that the surface temperature TS of the cast film 24 in the second area 29 can be measured by a temperature measuring means disposed near to the cast film 24 in a manner similar to the first area 28. Conditioning the second area 29 in this manner can evaporate water droplets by stopping their growth, and produce the porous film 11 having regularized pores. Should $TS \leq TD$ be met, further condensation may occur in addition to the water droplets, to destruct the formed porous structure.

$$TS > TD \ldots \text{(III)}$$

A main purpose of the second area 29 is to evaporate water droplets. However, solvent which has not been evaporated upstream of the second area 29 is also evaporated in the second area 29.

In the evaporation step for water droplets in the second area 29, a decompressing drying device can be used in place of the ejection exhaust units 45. Air inside the second area 29 is drawn by suction to decompress the second area 29 for drying, so that decompression/drying is conducted. This facilitates adjustment of evaporation speeds of respectively the solvent and water droplets. It is possible to encourage evaporation of the organic solvent and evaporation of the water droplets, and to form water droplets inside the cast film 24 in a better manner. The pores 12 can be formed in the positions of the presence of the water droplets in a controlled size and shape.

In case water droplets are formed on the uncovered surface of the cast film 24 by condensation in the first area 28, the amphipathic catechol group-containing compound in the solution 23 disperses on the uncovered surface in the presence of the water droplets to stabilize the water droplets, and particularly, comes to gather near to the water droplets. After this, in the course of evaporating the solvent, the hydrophobic high molecular compound and the catechol group-containing compound become dried in the local presence of the amphipathic catechol group-containing compound around the water droplets. After the solvent is evaporated finally, the porous film 11 as a mixture of the hydrophobic high molecular compound and the catechol group-containing compound is formed upon evaporating the water droplets in the second area 29. The porous film 11 is formed in a form of locally containing the catechol group-containing compound in its surface portion around the pores 12 where the water droplets have been present initially.

Furthermore, the porous film production system 21 includes a peel roller 47 for supporting the porous film 11 peeled from the casting belt 31 in the operation of peeling the cast film 24 from the casting belt 31. The porous film 11 supported on the peel roller 47 is moved to succeeding steps. Examples of the succeeding steps include a step of providing the porous film 11 with various functions, a step of winding the porous film 11 in a roll form, and the like.

The porous film 11 at the time of peeling from the casting belt 31 has the functional surface 13 disposed opposite to its peeling surface from the casting belt 31. As illustrated in Fig. 6, assuming that the peel roller 47 is disposed on the side of the functional surface 13 of the porous film 11, it is preferable for the peel roller 47 to support the porous film 11 in a manner to prevent contact with the functional surface 13 as much as possible. Thus, as illustrated in Fig. 7, the peel roller 47 has a roller center portion 47A and roller ends 47B, the roller center portion 47A constituting a center in a

longitudinal direction (width direction of the porous film 11), the roller ends 47B being disposed at ends of the roller center portion 47A. The roller ends 47B have a larger diameter than the roller center portion 47A. As there is a space between the functional surface 13 and the roller center portion 47A with the peel roller 47, the porous film 11 can be supported by the roller ends 47B without contacting the functional surface 13 at the center in the width direction. Also, the peel roller 47 is not limited to that as illustrated in Fig. 7 with a step. A concave roller having a diameter increasing from the center to lateral ends in the longitudinal direction can be used. It is possible to dispose the peel roller 47 for supporting the porous film 11 on a surface opposite to the functional surface 13.

Furthermore, it is preferable to use a feed roller (not shown) for transporting the porous film 11 for use in succeeding steps in a similar shape to the peel roller 47 described above. The feed roller can transport the porous film 11 without contacting the functional surface 13 at the center of the porous film 11 in the width direction.

Also, it is preferable for the functional surface 13 not to contact the porous film 11 in the course of winding the porous film 11 in a roll form, by simultaneously winding a spacer at lateral ends of the porous film 11 in the width direction.

A flow rate of the humid air from the ejection exhaust units 41 and 43 and the dry air from the ejection exhaust units 45 is preferably so determined that their relative speed in relation to the moving speed of the cast film 24 or travel speed of the casting belt 31 is in a range equal to or more than 0.05 m/s and equal to or less than 20 m/s. The relative speed being equal to or more than 0.05 m/s makes it possible more reliably to prevent entry of the cast film 24 into the second area 2 9 (see Fig. 6) before fine arrangement of water droplets than a structure with the relative speed less than 0.05 m/s. The relative speed being equal to or less than 20 m/s makes it possible more reliably to prevent unevenness of the uncovered surface of the cast film 24 or insufficient condensation than a structure with the relative speed more than 20 m/s.

In the present embodiment, the solution 23 is continuously cast to produce the porous film 11 of an elongated form. However, the present invention is not limited to the embodiment. For example, a structure for successively producing porous films of a sheet form by intermittently casting the solution 23 is included. In the present embodiment, a transport direction from the first area 28 toward the second area 29 and from the second area 29 to peeling is curved. However, a transport direction can be preferably straight so as to define a travel path on a plane entirely from the casting to forming of the porous film 11. For this structure, the functional surface 13 of the porous film 11 can be prevented from being contacted by a transport roller or the like.

It is also possible to arrange a plurality of casting dies in a shorter size in the width direction than the casting die 35 in the width direction of the support, to form cast films having a smaller width. Movement of the support in the casting step can be intermittent at a shorter time interval, to form plural smaller cast films on the support. Furthermore, a die opening of the casting die for the solution can be divided into plural die openings in the width direction for casting the solution 23 intermittently, to produce porous films of a strip shape one after another. Also, a producing condition of porous film of JP-A 2007-291367 can be applied.

Also, the porous film 11 can be produced by use of batch casting. The following is an example of the method. A glass plate is used as a support for casting. Solution is placed and spread on the support to form cast film. Then condensation is performed by cooling the support and cooling the cast film, or by drawing humid air to the periphery of the cast film. Solvent and water droplets created by the condensation are evaporated from the cast film, to obtain the porous film 11. It is also possible to position the cast film of the glass plate successively in the first and second areas 28 and 29 controlled discretely for the condensation point, humidity, temperature and the like as illustrated in Fig. 6, for the purpose of forming the porous film 11 from the cast film formed on the support such as glass.

Also, the porous film 11 may contain fine particles stabilized with the catechol group-containing compound. A diameter of the fine particles of this structure is smaller than that of the pores 12. Preferably, the diameter of the fine particles should be small in a range free from influencing a shape of the pores 12.

Examples of the fine particles are inorganic particles (fine particles of metal such as Pt, Au, Ag, Cu and the like, semiconductor fine particles such as Si, Ge, ZnSe, CdS, ZnO, GaAs, InP, GaN, SiC, SiGe, $CuInSe_2$ and the like, and fine particles of metal oxide such as $TiO_2$, $SnO_2$, $SiO_2$, ITO and the like), fine particles of a hydrophilic high molecular compound, fine particles of a hydrophobic high molecular compound without solubility to a dispersion medium, and nanocrystals of a low molecular organic compound without solubility to a dispersion medium. A type of the fine particles for use in the present invention can be one type or two or more types.

Porous film 51 of a second embodiment, as illustrated in Figs. 8 and 9, is a honeycomb structure of porous film having the pores 12 on the functional surface 13 in a manner similar to the porous film 11. A difference of the porous film 51 from the porous film 11 lies in that the center-to-center distance L1 is smaller than the pore diameter D, and that the pore 12 is formed to communicate an adjacent pore 12 within the film. Holes are open through the pore walls 14, which do not partition the pores 12 in a discrete manner. Thus, passageways are formed within the porous film 51 in the honeycomb structure. Also, the pore walls 14 are in an approximately equal shape and size in a bar form, and are arranged regularly. In the porous film 51, elements with functions similar to those in the porous film 11 are denoted with identical reference numerals, of which further description is omitted. Also, the porous film 51 can be produced in the same method as the porous film 11 by use of raw material of compounds similar to those used for the porous film 11.

Porous film 53 of a fourth embodiment, as illustrated in Figs. 10 and 11, is a honeycomb structure of porous film having the pores 12 on the functional surface 13 in a manner similar to the porous film 11. A difference of the porous film 53 from the porous film 11 lies in that each of the pores 12 is formed to penetrate from the functional surface 13 to an opposite film surface. In the porous film 53, elements with functions similar to those in the porous film 11 are denoted with identical reference numerals, of which further description is omitted. Also, the porous film 53 can be produced in the same method as the porous film 11 by use of raw materials of compounds similar to those used for the porous film 11.

Porous film 55 of a fifth embodiment, as illustrated in Figs. 12 and 13, is a honeycomb structure of porous film having the pores 12 on the functional surface 13 in a manner similar to the porous film 53. A difference of the porous film 55 from the porous film 53 lies in that the center-to-center distance L1 is smaller than the pore diameter D, and that the pore 12 is formed to communicate to an adjacent pore 12 within the film. Holes are open through the pore walls 14, which do not partition the pores 12 in a discrete manner. Thus, passageways are formed within the porous film 55 in the honeycomb structure. Also, the pore walls 14 of the porous film 55 are in an approximately equal shape and size in a bar form, and are arranged regularly. In the porous film 55, elements with functions similar to those in the porous film 53 are denoted with identical reference numerals, of which further description is omitted. Also, the porous film 55 can be produced in the same method as the porous film 53 by use of raw material of the same compounds as those used for the porous film 53.

A multi-pillar film 57 of a sixth embodiment, as illustrated in Fig. 14, is a so-called pillar film on which pillars 58 are formed on one film surface as plural projections. The pillars 58 are in a substantially equal shape and size, and are arranged regularly at a constant pitch. A functional surface 59 with adhesive property is constituted by an upper surface of the pillars 58 as illustrated in Figs. 15 and 16.

The upper surface of the pillars 58 is shaped in a surrounded form with three arcuate curves which are convex internally. A width of the pillars 58 gradually decreases from the functional surface 59 to the inside. A center-to-center distance L4 between the adjacent pillars 58 is constant and equal to or more than 10 nm and equal to or less than 100 $\mu$m. A distance L5 between the adjacent pillars 58 is constant and equal to or more than 5 nm and equal to or less than 100 $\mu$m.

Also, the multi-pillar film 57 is constituted by the same compounds as the porous film 11. The multi-pillar film 57 is produced by use of the same raw materials as those for producing the porous film 11. Thus, the catechol group-containing compound is locally present within the multi-pillar film 57 in a manner similar to the porous film 11. An amount of the catechol group-containing compound increases toward side surfaces of the pillars 58 and toward the functional surface 59. The catechol group-containing compound provides the functional surface 59 with the adhesive property in relation to a base plate of various raw materials.

A composite structure 71 of a seventh embodiment, as illustrated in Fig. 17, is constituted by a base plate 65 and the porous film 11 overlaid on the base plate 65, which has a more smooth surface than the functional surface 13 with unevenness. The composite structure 71 is produced by an adhesion step in which the functional surface 13 of the porous film 11 is adhered to the smooth surface of the base plate 65. For example, liquid is used, in which 10 mmol/L of tris- (hydroxymethyl)aminomethane is added to maintain pH at 8. Droplets of 10-100 $\mu$L of the liquid are provided to the surface of the base plate 65, to which the functional surface 13 is pressed, so that the composite structure 71 can be produced. The functional surface 13 has sufficient adhesive property because of local presence of the catechol group-containing compound. Thus, the composite structure 71 is produced without presence of an adhesive agent between the porous film 11 and the base plate 65.

The functional surface 13 of the porous film 11 has the adhesive property in relation to the substrate material of various raw materials, so that various materials can be used for the base plate 65. Examples of materials for the base plate 65 can be metal such as titanium, glass such as quartz glass and lead glass, monocrystalline material such as a Si wafer, and resins such as PET (polyethylene terephthalate) film and PTFE (polytetrafluoethylene). The composite structure 71, for example, is used as a composite structure 72 of an eighth embodiment, by way of a material for producing a product substrate 85 to be described later.

The composite structure 72 of an eighth embodiment, as illustrated in Fig. 18, includes the base plate 65 and a mask layer 74 overlaid on the base plate 65, the mask layer 74 having plural open pores 73. The mask layer 74 is adhered to the base plate 65. The open pores 73 are in a shape and size substantially equal to one another, and are arranged regularly at a constant pitch. As will be described later, the composite structure 72 can be used as a raw material for producing the product substrate 85 by etching.

The composite structure 72 can be produced from the composite structure 71. Specifically, as illustrated in Fig. 19, force in a direction A, for example, to peel the base of the porous film 11 from the composite structure 71 is applied to the composite structure A. Thus, the base portion of the porous film 11 is peeled to obtain the composite structure 72. This step is a step of separating the portion of the porous film 11 in the composite structure 71 along a plane substantially parallel with the functional surface 13 near to a portion with the smallest thickness the pore walls 14 (cutting step).

A composite structure 75 of a ninth embodiment, as illustrated in Fig. 20, is constituted by the base plate 65

and the porous film 53 overlaid on the base plate 65. The composite structure 75 is produced by an adhesion step in which the functional surface 13 of the porous film 53 is adhered to a smooth surface of the base plate 65. Owing to the adhesion of the functional surface 13 to the base plate 65, the composite structure 75 can be produced without presence of an adhesive agent between the porous film 53 and the base plate 65 in a manner similar to the composite structure 71. The composite structure 75 can be used as a material for producing a product substrate from the base plate 65.

A composite structure 77 of a tenth embodiment, as illustrated in Fig. 21, is constituted by the base plate 65 and the multi-pillar film 57 overlaid on the base plate 65. The composite structure 77 is produced by an adhesion step in which the functional surface 59 of the multi-pillar film 57 is adhered to a smooth surface of the base plate 65. The composite structure 77 can be produced without presence of an adhesive agent between the multi-pillar film 57 and the base plate 65 in a manner similar to the composite structure 71. The composite structure 77 can be used as a material for producing a product substrate.

A composite structure 78 of an eleventh embodiment, as illustrated in Fig. 22, includes the base plate 65 and a small pillar layer 80 overlaid on the base plate 65, the small pillar layer 80 having plural small pillars 79. The small pillar layer 80 is attached to the base plate 65 by adhesion. The small pillars 79 are in a shape and size substantially equal to one another, and are arranged regularly. The composite structure 78 can be produced by performing the above-described cutting step for the composite structure 77. For example, the composite structure 78 can be used as a material for producing a product substrate.

As illustrated in Fig. 23, a working method (etching method) of working (etching) the base plate 65 by use of the composite structure 72 includes a recess forming step of forming a recess 84 in the base plate 65 and a removing step of removing the mask layer 74 after forming the recess 84. The base plate 65 is a substrate material as an object to be etched. In the present embodiment, the base plate 65 is etched as a substrate material in a plate shape. However, an object to be etched as substrate material is not limited to a plate shape but can be, for example, in a block shape.

An etching device 81 as an example can be used in the recess forming step. The etching device 81 includes a device body 81a, plural ejectors 81b and a collector, and is opposed to the mask layer 74 of the composite structure 72. Etchant 82 is provided to the device body 81a. The ejectors 81b are arranged under the device body 81a on a plane in a tightly arranged manner, and eject the etchant 82 provided in the device body 81a. An ejecting direction of the ejectors 81b for the etchant 82 is set as a direction substantially perpendicular to a surface 74a (uncovered surface) of the mask layer 74 being uncovered. An example of the etchant 82 is a compound or composition reacting with the base plate 65 for corroding the substrate material.

Examples of the etchant 82 for use can be mixed solution of hydrofluoric acid (HF) and nitric acid ($HNO_3$) assuming that titanium is used for the base plate 65, or aqueous solution of potassium hydroxide (KOH) or aqueous solution of hydrofluoric acid (HF) or gas such as tetrafluorocarbon ($CF_4$) for dry etching assuming that glass such as quartz glass or lead glass is used for the base plate 65. The etchant 82 for use can be aqueous solution of potassium hydroxide (KOH) or gas such as tetrafluorocarbon ($CF_4$) for dry etching assuming that a Si wafer is used for the base plate 65, and can be gas such as tetrafluorocarbon ($CF_4$) for dry etching assuming that resin such as PET film or PTFE is used for the base plate 65.

To form the recess 84, the composite structure 72 is so disposed as to direct a surface of the base plate 65 of adhesion of the mask layer 74 substantially perpendicularly with an ejection direction of the ejectors 81b, and the etchant 82 is ejected from the ejectors 81b. The etchant 82 contacts only a portion of a surface of the base plate 65 having the open pores 73, to form a plurality of the recesses 84. A depth of the recesses 84 can be controlled by ejection time of the etchant 82.

In the removing step, a removing device 87, for example, can be used. The removing device 87 includes a device body 87a, ejectors 87b and a collector, and is opposed to the mask layer 74 of the composite structure 72 moved from the recess forming step. A removal agent 88 is provided to the device body 87a. The ejectors 87b are arranged under the device body 87a on a plane in a tightly arranged manner, and eject the removal agent 88 provided in the device body 87a. An ejecting direction of the ejectors 87b for the removal agent 88 is set as a direction substantially perpendicular to the surface 74a of the mask layer 74. An example of the removal agent 88 is an agent reacting with the mask layer 74, namely, an agent reacting with the porous film 11.

In using polystyrene or polycarbonate as a hydrophobic high molecular compound in the porous film 11, it is possible to use chloroform, for example, as the removal agent 88.

To remove the mask layer 74, the mask layer 74 is directed to the ejectors 87b, which are caused to eject the removal agent 88. The mask layer 74 being removed by reaction with the removal agent 88, it is possible to obtain the product substrate 85 having the recesses 84 arranged regularly and formed at a substantially equal shape and size.

Note that the recess forming step and the removing step can be performed for any composite structure in which the etchant 82 can be directly ejected toward the base plate 65. For example, the composite structure 75 or the composite structure 78 can be used in place of the composite structure 72. The etchant 82 for the recess forming step can be ejected toward an uncovered surface 75a of the composite structure 75 (see Fig. 20) or toward an uncovered surface 78a of the composite structure 78 (see Fig. 22). It is possible in the above-described recess forming step to use any

known etching device of the same function in place of the etching device 81. It is possible in the above-described removing step to use any known removing device of the same function in place of the removing device 87.

Fig. 24 is a plan of the product substrate 85 obtained by the working method for the base plate described above. Positions of the recesses 84 in the product substrate 85 are positions transferred from the positions of the pores 12 in the porous film 11. Let a recess diameter R be a diameter of the recesses 84. Let a recess distance L6 be a distance between the adjacent recesses 84 as viewed in the plane. The recess diameter R is substantially equal to the open diameter AP. The recess distance L6 is substantially equal to the pore distance L3.

A film laminate 91 of a twelfth embodiment, as illustrated in Fig. 25, is constituted by adhesion of the functional surface 13 of the porous film 11 to a surface of a second one of the porous films 11 opposite to the functional surface 13. In the film laminate 91, the two porous films 11 are so attached that the pores 12 of the first porous film 11 are aligned in the position with the pores 12 of the second porous film 11 in the thickness direction.

A film laminate 92 of a thirteenth embodiment, as illustrated in Fig. 26, is constituted by adhesion of the functional surface 13 of the porous film 11 to the functional surface 13 of a second one of the porous films 11. In the film laminate 92, the two porous films 11 are so attached that the pores 12 of the first porous film 11 are aligned in the position with the pores 12 of the second porous film 11 in the thickness direction.

A film laminate 93 of a fourteenth embodiment, as illustrated in Fig. 27, is constituted by adhesion of the functional surface 13 of the porous film 53 to a surface of a second one of the porous films 53 opposite to the functional surface 13. In the film laminate 93, the two porous films 53 are so attached that the pores 12 of the first porous film 53 are aligned in the position with the pores 12 of the second porous film 53 in the thickness direction.

Note that the pores 12 of the plural films constituting the film laminates 91, 92 and 93 are aligned together in the thickness direction. However, the pores 12 may not be aligned in the thickness direction necessarily. The number of the porous films overlaid together is not limited to 2, but can be three or more in the film composite structure of the present invention. Also, a pore diameter of porous films to be overlaid may not be equal but can be different between those.

Furthermore, film composite structures of the present invention included one formed by use of the porous film 16, 51 or 55 or the multi-pillar film 57 in place of the porous film 11 or 53. As the porous film 16, 51 or 55 or the multi-pillar film 57 includes the functional surface 13 or 59 having an adhesive property, the film composite structure can be produced in a manner similar to the porous films 11 and 53.

Examples of the present invention will be hereinafter described. The present invention is not limited to those examples.

EXAMPLE 1

[Experiment 1] to [Experiment 3]

DMA used in the synthesis of the catechol group-containing compound was obtained as follows. A method of obtaining DMA is described now by referring to a chemical reaction formula on a left side in Fig. 28. Ultrapure water was produced by use of an ultrapure water producing apparatus (MILLI-Q (trademark)) manufactured by Millipore Corporation. Sodium bicarbonate ($NaHCO_3$), borax ($Na_2B_4O_7$) and dopamine hydrochloride (abbreviated as DOPA, $C_8H_{11}NO_2$, molecular weight of approximately 153.2) were added to the ultrapure water. The solution was stirred, while tetrahydrofuran (THF) solution of a dimethacrylic acid anhydride ($C_8H_{10}O_3$, molecular weight of approximately 154.2) expressed by the formula (8) was poured in the stirred solution. At this time, aqueous solution of sodium hydroxide (NaOH) was used to keep pH of the above-described solution equal to or more than 8. The solution was stirred for one night, before pH of the solution was adjusted at a level equal to or less than 2 by use of hydrochloric acid (HCl). Then ethyl acetate was added, to extract the product. The solution was dried by sodium sulfate ($Na_2SO_4$), and then condensed and recrystallized by an evaporator. DMA was collected by decompression and filtration, and dried by vacuum drying, to obtain DMA for use in the synthesis of the catechol group-containing compound.

[Chemical 9]

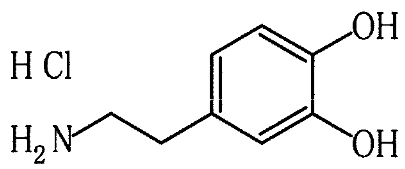

... formula (7)

[Chemical 10]

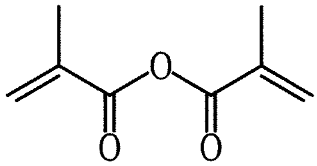

... formula (8)

Three samples of the catechol group-containing compounds expressed by the formula (5) were synthesized for DMA as first compound and DAA as second compound to satisfy the proportions of the amounts determined for the respective experiments. DMA for use was one obtained by the above-described method. DAA and AIBN were those refined by recrystallization before the polymerization. DAA was recrystallized by use of ethyl acetate. AIBN was recrystallized by use of methanol.

The catechol group-containing compound was obtained as follows. A method of obtaining the catechol group-containing compound is described now by referring to a chemical reaction formula on a right side in Fig. 28. DMA, DAA and AIBN were dissolved in a mixed solvent obtained by mixing DMSO and benzene at a ratio of 0.413:8.77. The solution was frozen and degassed for three times, before the solution was heated as high as 70 deg. C. in the atmosphere of nitrogen, and started being polymerized in free radical polymerization. After the polymerization for 6 hours, the solution of the reaction was poured in acetonitrile, and centrifugated to obtain white precipitation. The white precipitation was decompressed and dried for 12 hours at a room temperature, to obtain a solid matter of the catechol group-containing compound. The solid matter was dissolved in mixed solvent of acetone and refined water, and refined by filtration and precipitation.

A ratio in the amounts between DMA, DAA and AIBN was 1:4:0.1 in the experiment 1, 1:5.5:0.13 in the experiment 2, and 1:12:0.26 in the experiment 3. A yield of the catechol group-containing compound in the respective experiments was 72.9 % in the experiment 1, 66.4 % in the experiment 2, and 60.0 % in the experiment 3.

For the catechol group-containing compound obtained from the experiment 2, NMR measurement was conducted by use of a nuclear magnetic resonance apparatus (manufactured by Bruker, type AVANCE (trademark) III 500 type). A chart of an absorption spectrum obtained by the NMR measurement is illustrated in Fig. 29.

According to the NMR chart of Fig. 29, no peak of a double bond of DMA and DAA as monomers was observed. Peaks expressing structures a and b in the formula (5) were observed.

EXAMPLE 2

[Experiment 4] to [Experiment 7]

The porous film 11 constituted by polystyrene and the amphipathic high molecular compound was produced. The amphipathic high molecular compound for use was the catechol group-containing compound (herein referred to as a compound A) obtained by the experiment 1 in the example 1.

At first, polystyrene and the compound A were dissolved in solvent, to produce the solution 23 with a density of a solid content of 10 mg/mL. A mass ratio of the compound A to 100 % of polystyrene in the porous film 11 was determined as a value for each of the experiments. The solvent for use was chloroform ($CHCl_3$). 35-40 mL of the solution 23 was cast on a glass plate as a casting support, to form the cast film 24.

A mass ratio of the high molecular compound A in the respective experiments was 10 % in the experiment 4, 1 % in the experiment 5, 50 % in the experiment 6, and 0.01 % in the experiment 7. The values of the mass ratio were indicated in a field of the "mass ratio". As the compound A used in the experiments 4-7 contained a catechol group, "yes" was indicated in a field of the "presence of catechol group" in Table 1.

Instead of the porous film production system 21 for the porous film of Fig. 6, a porous film production system (not shown, hereinafter referred to as a system C) was used to produce porous film, the porous film production system having the first and second areas 28 and 29 arranged linearly, and having the first area 28 without the casting die 35. The system C had a transport means for transporting a glass plate as a support from the first area 28 to the second area 29. Transporting the glass plate with the transport means caused the cast film 24 to pass the first area 28 and then the second area 29. Conditioned values of $\Delta T$ in the upstream area having the ejection exhaust unit 41 within the first area 28, in the downstream area having the ejection exhaust units 43 within the first area 28, and in the second area 29 were determined as 15, 3 and -10 deg. C. Note that the value $\Delta T$ was set smaller in the downstream area than in the upstream area. Each sample of the porous films was the porous film 11 having the pore walls 14 as illustrated in Fig. 3.

In relation to each of the experiments 4-7, five samples of the porous film 11 were produced by the system C. The composite structure 71 was produced from the base plate 65 for adhesion of the functional surface 13 of the porous film 11 after selection of each of the titanium plate, glass plate, Si wafer, PET film and PTFE. Any one of the samples of the composite structure 71 was produced by pouring 10-100 $\mu$L of liquid on the surface of the base plate 65 and by pressing the functional surface 13 to the surface, the liquid being prepared by adding 10 mmol/L of tris-(hydroxymethyl)aminomethane and maintaining pH at 8. For each sample of the composite structure 71, adhesive strength of an adhesion surface was measured.

For a measurement method of the adhesive strength, a test piece was prepared and tested in the method according to peeling of 180 degrees in the peeling test (JIS K6854-2). Evaluation was made according to the following evaluation of functions. Also, the adhesive strength was evaluated according to the following criteria. Results of evaluating the adhesive strength were indicated in fields of "adhesive strength" in Table 1. An evaluation result of the adhesive strength with the titanium plate was indicated in a field of "titanium plate". An evaluation result of the adhesive strength with the glass plate was indicated in a field of "glass plate". An evaluation result of the adhesive strength with the Si wafer was indicated in a field of "Si wafer". An evaluation result of the adhesive strength with the PET film was indicated in a field of "PET film". An evaluation result of the adhesive strength with the PTFE was indicated in a field of "PTFE".

A: Adhesion occurred. In case manual operation was made to peel the porous film 11, the porous film 11 was separated along a plane substantially parallel with the functional surface 13 near a portion of the smallest thickness of the pore walls 14.
B: Adhesion occurred, but peeling was possible by applying high force immediately after the adhesion. Otherwise, partial adhesion occurred, but partial peeling was possible.
C: Adhesion did not occur at all.

[Experiment 8]

Porous film was obtained in the same method as the experiment 4 but with a difference in that the compound A in use was the amphipathic high molecular compound (herein refereed to as a compound B) expressed in the formula (9). The compound B was constituted by a group component expressed in the formula (9-I) below and a group component expressed in the formula (9-II) below. Also, the adhesive strength in relation to the titanium plate, glass plate, Si wafer, PET film and PTFE was measured, and evaluated according to the same criteria as the experiment 4. As no catechol group is contained in the compound B used in the experiment 8, "no" was indicated in a field of the "presence of catechol group" in Table 1. The adhesive strength was indicated in Table 1 in the same method as the experiment 4.

[Chemical 11]

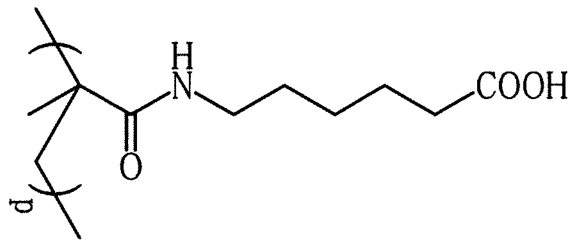

... formula (9-I)

formula (9)

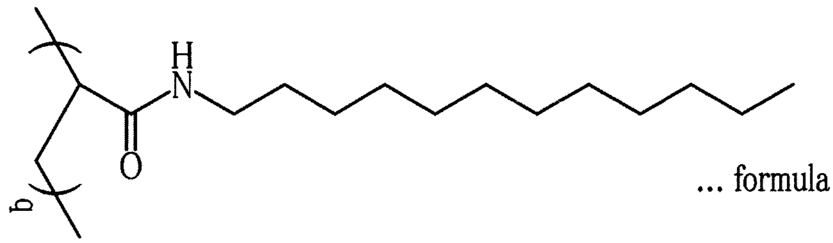

... formula (9-II)

[Table 1]

| | | Experiment 4 | Experiment 5 | Experiment 6 |
|---|---|---|---|---|
| Amphipathic compound | Substance name | Compound A | Compound A | Compound A |
| | Mass ratio | 10 % | 1 % | 50 % |
| | Presence of catechol group | Yes | Yes | Yes |
| Hydrophobic high | Substance name | Polystyrene | | |

| | | | | |
|---|---|---|---|---|
| molecule | | | | |
| Adhesive strength | Titanium plate | A | A | A |
| | Glass plate | A | A | A |
| | Si wafer | A | A | A |
| | PET film | A | A | A |
| | PTFE | A | A | A |

| | | Experiment 7 | Experiment 8 |
|---|---|---|---|
| Amphipathic compound | Substance name | Compound A | Compound B |
| | Mass ratio | 0.01 % | 10 % |
| | Presence of catechol group | Yes | No |
| Hydrophobic high molecule | Substance name | Polystyrene | |
| Adhesive strength | Titanium plate | B | C |
| | Glass plate | B | C |
| | Si wafer | B | C |
| | PET film | B | C |
| | PTFE | B | C |

It was concluded according to the results obtained from the experiments 4-8 that the porous film 11 produced by using the amphipathic compound containing a catechol group had the functional surface 13 capable of adhesion to a base plate of various raw materials in an easy and strong manner.

EXAMPLE 3

[Experiment 9]

To the functional surface 13 of the porous film 11 obtained in the same method as the experiment 4, a titanium plate as the base plate 65 was attached by adhesion, to produce the composite structure 71. Load of approximately 35.6 g/cm$^2$ was applied to the composite structure 71 in a direction substantially perpendicular to the functional surface 13, and was left to stand for one night.

The base of the porous film 11 was peeled from the composite structure 71 to obtain the composite structure 72. The peeling separated the porous film 11 on a plane substantially parallel with the functional surface 13 near a portion of the smallest thickness of the pore walls 14. After this, the recesses 84 were formed in the titanium plate by the etching device 81. To form the recesses 84, the etchant 82 for use was mixed solution of hydrofluoric acid (HF) and nitric acid ($HNO_3$). No particular peeling of the mask layer 74 from the titanium plate, or no partial rise of the mask layer 74 occurred in the course of forming the recesses 84.

After forming the recesses 84 in the titanium plate, the mask layer 74 was removed by the removing device

87. Chloroform was used as the removal agent 88 for removing the mask layer 74. Also, ozone processing was conducted for 20 minutes. Ultrasonic washing was conducted in water for 15 minutes. Thus, a titanium product substrate was obtained at an approximately equal shape and size and with the recesses 84 arranged regularly. The shape, size and positions of the recesses 84 in the titanium product substrate were such formed by transferring the shape, size and positions of the pores 12 in the porous film 11. Thus, no failure in fine patterning was found in the titanium product substrate as a result caused by peeling or locally rising of the mask layer 74 from the titanium plate.

**Claims**

1. Film including plural pores or plural projections formed equally with one another in a shape and size, and arranged regularly at a constant pitch on a film surface, comprising:

    a hydrophobic high molecular compound; and
    a catechol group-containing compound being amphipathic and high molecular and containing a catechol group.

2. Film as defined in claim 1, wherein said catechol group-containing compound is contained at an increasing amount in a direction toward said film surface where said pores or said projections are formed.

3. Film as defined in claim 1 or 2, wherein said catechol group-containing compound is polymer;
said polymer is obtained by polymerization of a first compound from which a first homopolymer containing a catechol group is producible and a second compound from which a second homopolymer without a catechol group is producible;
said polymer contains a catechol group-containing portion of a series of plural first repeating units of said first homopolymer, and a catechol group-free portion of a series of plural second repeating units of said second homopolymer.

4. Film as defined in claim 3, wherein said polymer is copolymer of said catechol group-containing portion and said catechol group-free portion.

5. Film as defined in claim 3, wherein said first repeating units have a structure of a formula (1) below, and said second repeating units have a structure of a formula (2) below.

[Chemical 12]

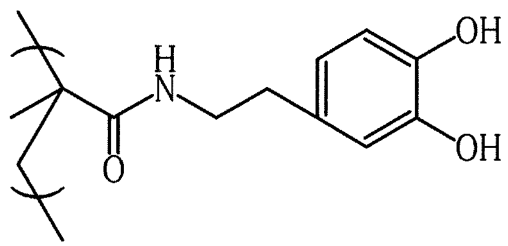

... formula (1)

[Chemical 13]

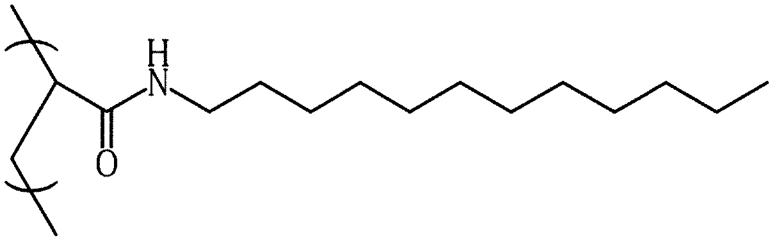

... formula (2)

6. Film as defined in claim 5, wherein a ratio n/(m+n) is in a range equal to or more than 0.01 and equal to or less than 0.8, where n is a number of said first repeating units in said catechol group-containing portion, and m is a number of said second repeating units in said catechol group-free portion.

7. Film as defined in claim 1 or 2, wherein an amount of said catechol group-containing compound is in a range equal to or more than 0.1 part by mass and equal to or less than 50 parts by mass with reference to 100 parts by mass of said hydrophobic high molecular compound.

8. Film as defined in claim 1 or 2, wherein said hydrophobic high molecular compound is polystyrene, polycarbonate, polymethyl methacrylate, polybutadiene or cellulose triacetate.

9. A composite structure comprising:

film, including plural pores or plural projections formed equally with one another in a shape and size, and arranged regularly at a constant pitch on a film surface, and containing a hydrophobic high molecular compound and a catechol group-containing compound being amphipathic and high molecular and containing a catechol group; and
a substrate material, having a more smooth surface than said film surface having said pores or said projections with unevenness, and overlaid on said film by fitting said surface on said film surface.

10. A film laminate comprising:

first film, including plural pores or plural projections formed equally with one another in a shape and size, and arranged regularly at a constant pitch on a film surface, and containing a hydrophobic high molecular compound and a catechol group-containing compound being amphipathic and high molecular and containing a catechol group; and
second film, including plural pores or plural projections formed equally with one another in a shape and size, and arranged regularly at a constant pitch on a film surface, being overlaid on said film surface of said first film having said pores or said projections, and containing a hydrophobic high molecular compound and a catechol group-containing compound being amphipathic and high molecular and containing a catechol group.

11. A producing method of producing film, including plural pores or plural projections formed equally with one another in a shape and size, and arranged regularly at a constant pitch on a film surface, said producing method comprising steps of:

casting solution on a support to form cast film, said solution containing a hydrophobic high molecular compound and a catechol group-containing compound dissolved in solvent, said catechol group-containing compound being amphipathic and high molecular and containing a catechol group;
performing condensation on said cast film; and
evaporating said solvent and water droplets created by said condensation from said cast film, to form said plural pores or said plural projections.

12. An etching method comprising:

(A) a step of adhering film to a substrate material to be etched to obtain a composite structure, wherein said film includes plural pores or plural projections formed equally with one another in a shape and size, and arranged regularly at a constant pitch on a film surface, said film contains a hydrophobic high molecular compound and a catechol group-containing compound being amphipathic and high molecular and containing a catechol group, said substrate material has a more smooth surface than said film surface having said pores or said projections with unevenness, and said film is overlaid on said substrate material by fitting said surface on said film surface;
(B) a step of causing etchant for said substrate material to contact said composite structure from a side of said film, to form a recess in said substrate material;
(C) a step of melting or dissolving said film in said composite structure after said step B, to remove said film.

**13.** An etching method as defined in claim 12, wherein said film includes said pores formed in said film surface without penetration in a thickness direction;
pore walls defined between said plural pores are cut along said film surface between said step A and said step B, to remove a film portion of said film inclusive of a film surface opposite to said film surface.

**14.** An etching method as defined in claim 12, wherein said film includes said projections formed on said film surface; said projections are cut along said film surface between said step A and said step B, to remove a film portion of said film inclusive of a film surface opposite to said film surface.

FIG.1

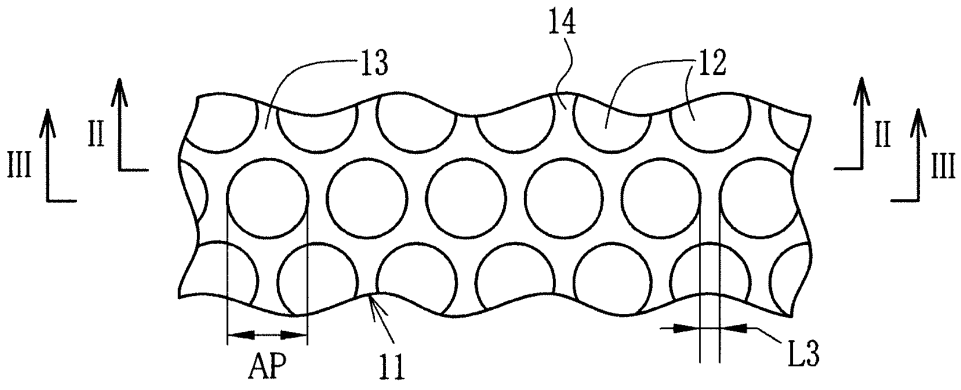


FIG.2

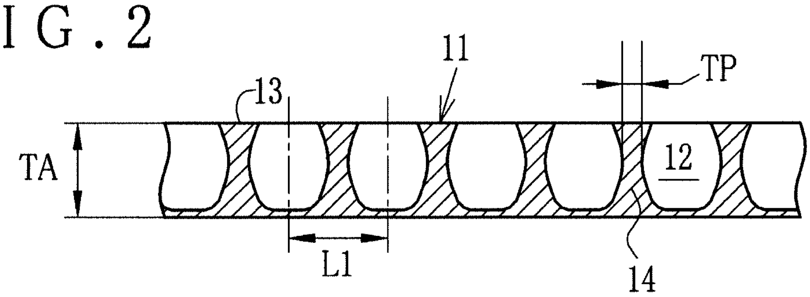


FIG.3

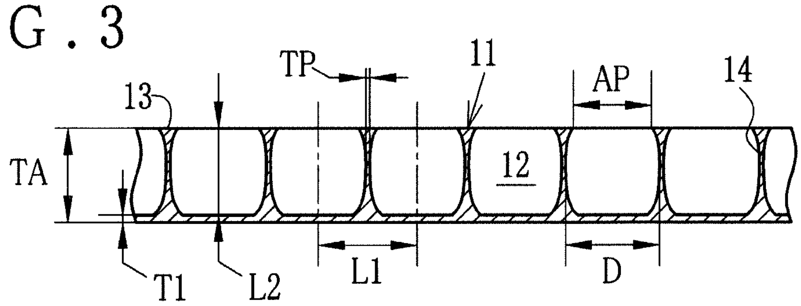


FIG.4

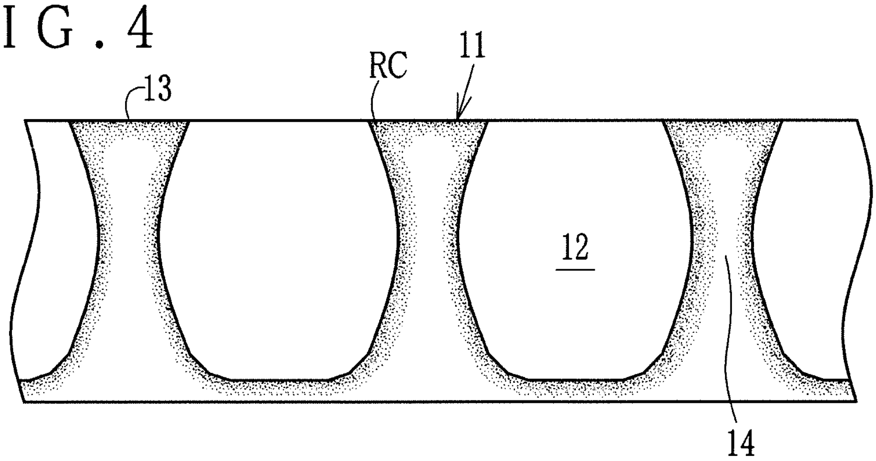

FIG. 5

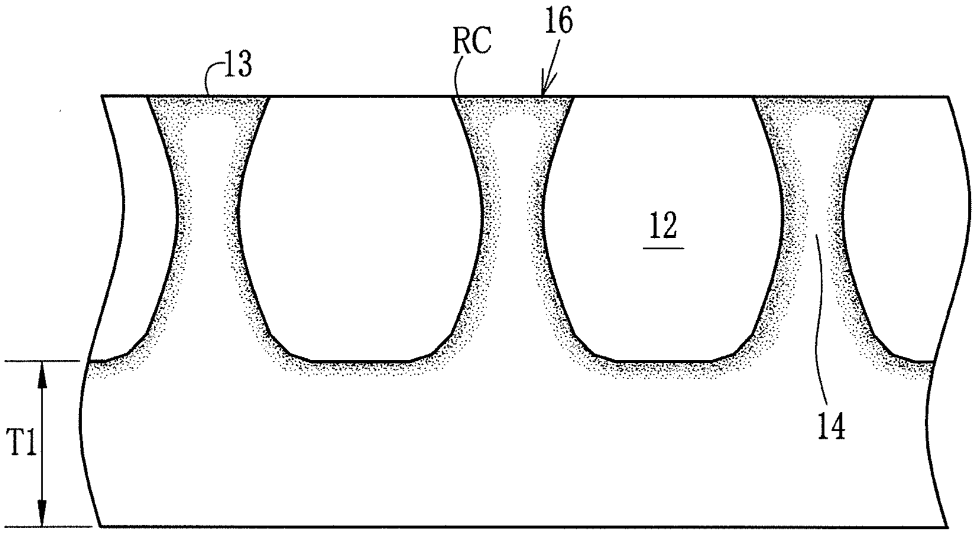

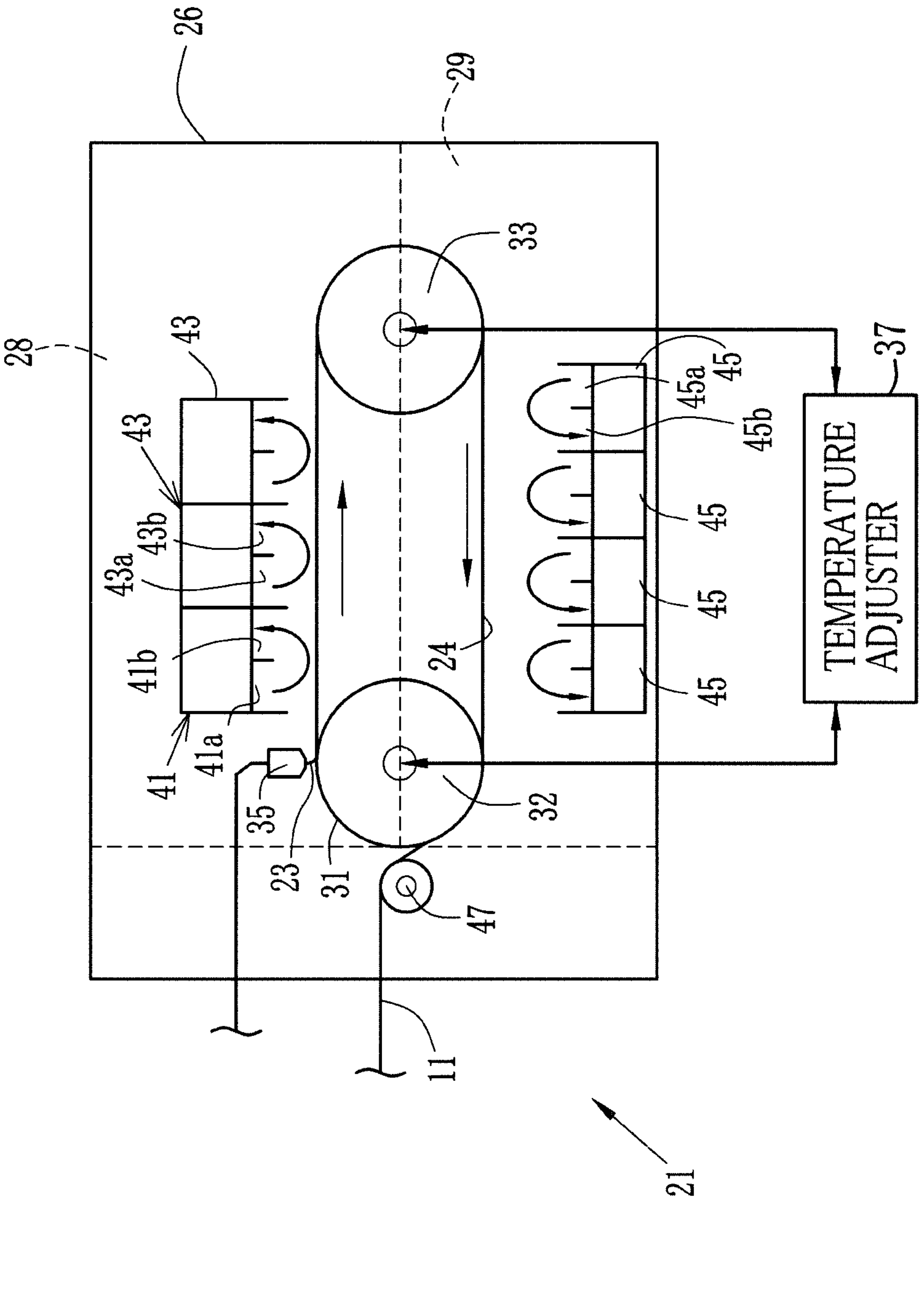
26
29
28
43
33
43
45
45a
45b
37
43a
43b
41b
41
41a
35
23
31
24
32
47
45
11
21
TEMPERATURE
ADJUSTER

FIG. 6

FIG. 7

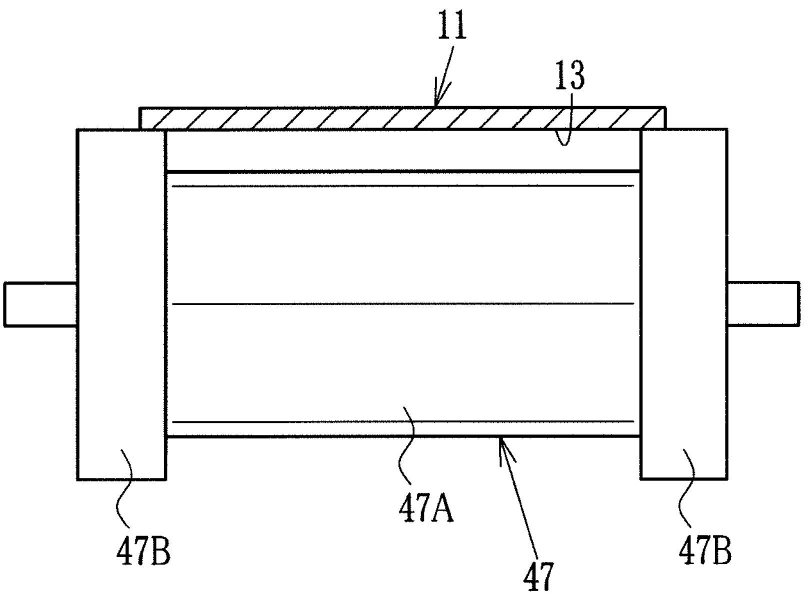

FIG. 8

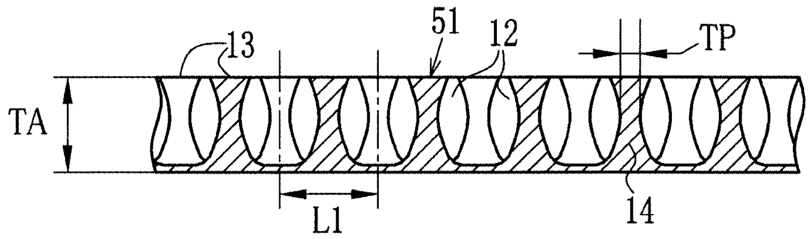


FIG. 9

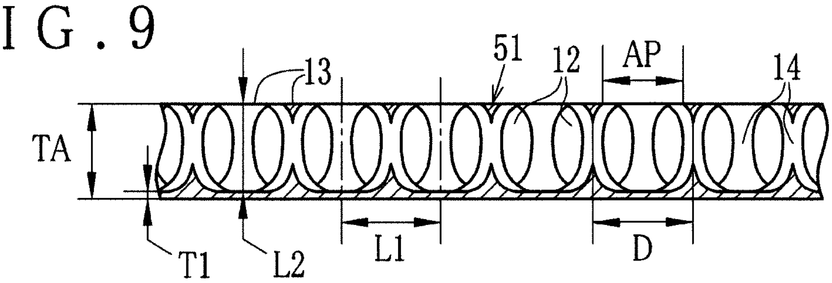


FIG. 10

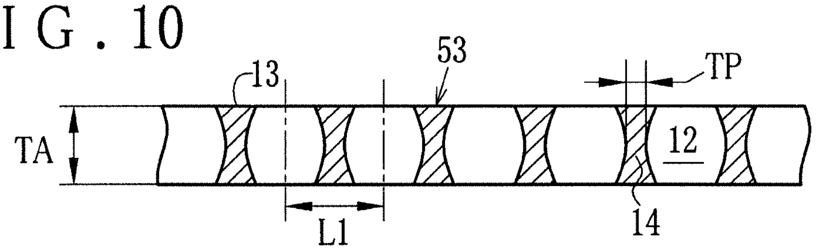


FIG. 11

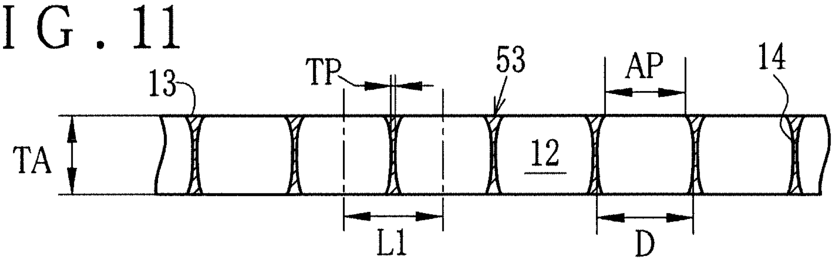


FIG. 12

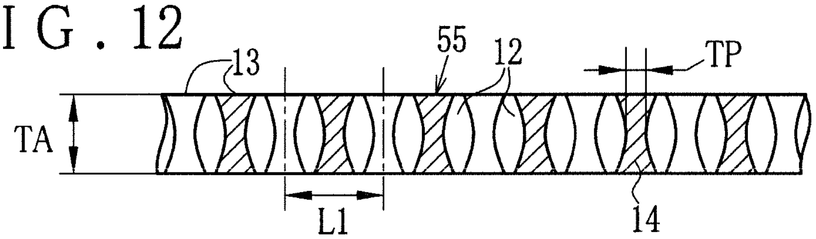


FIG. 13

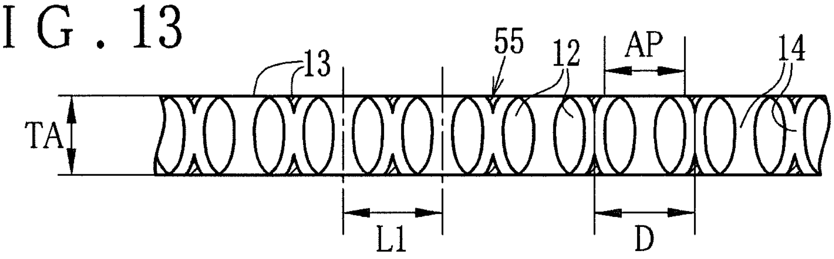

FIG. 14

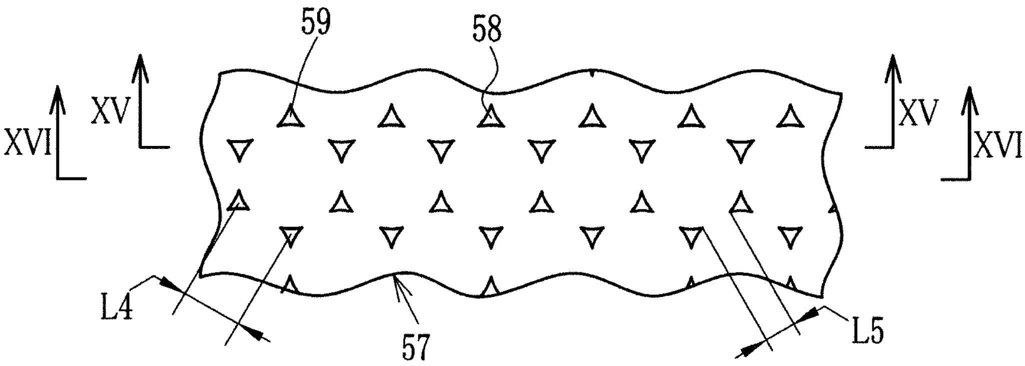


FIG. 15

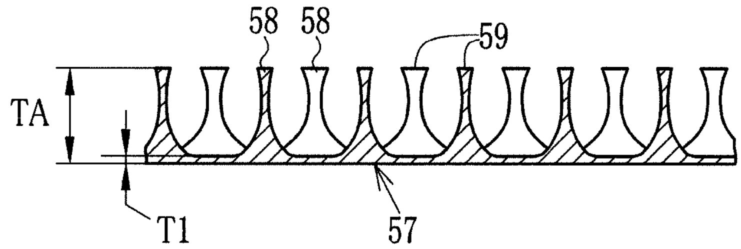


FIG. 16

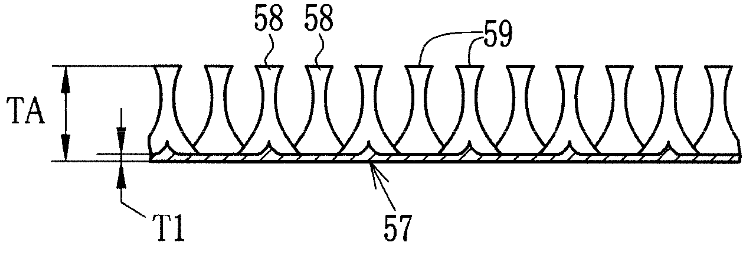

FIG. 17

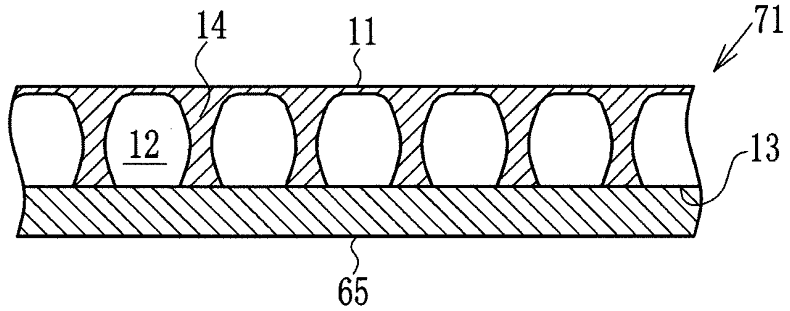


FIG. 18

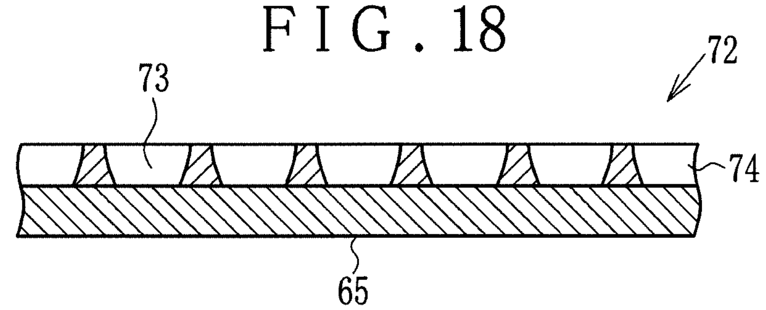


FIG. 19

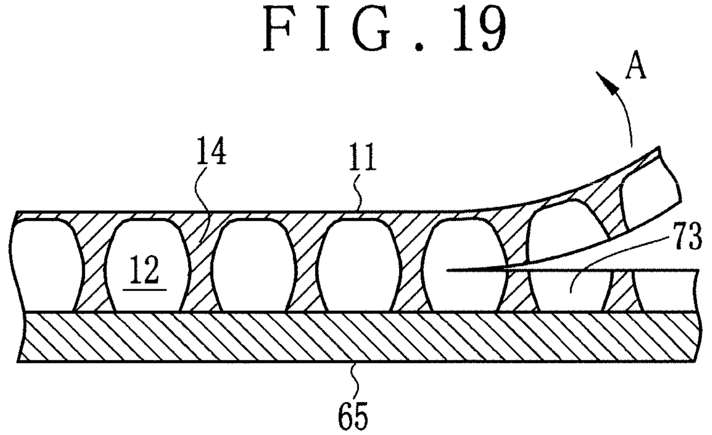

FIG. 20

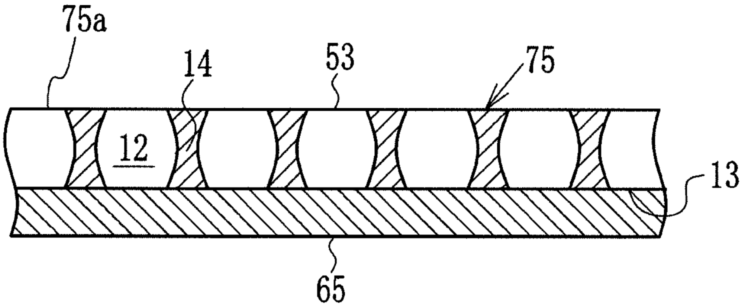


FIG. 21

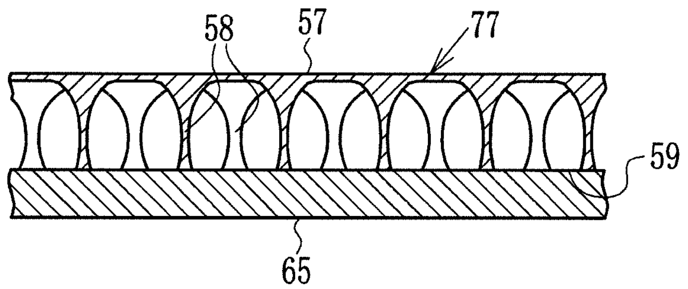


FIG. 22

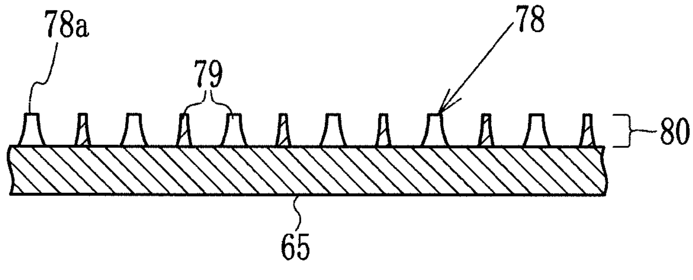

FIG. 23

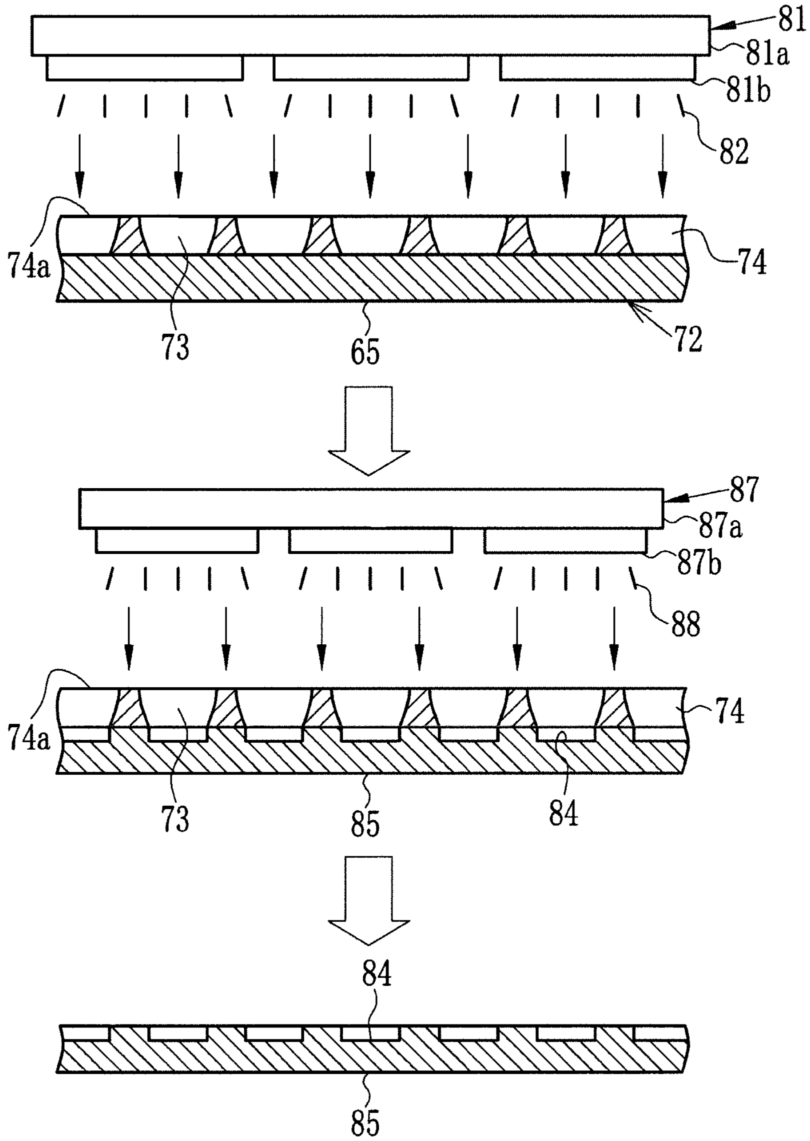
81
81a
81b
82
74a
74
73
65
72
87
87a
87b
88
74a
74
73
85
84
84
85

FIG. 24

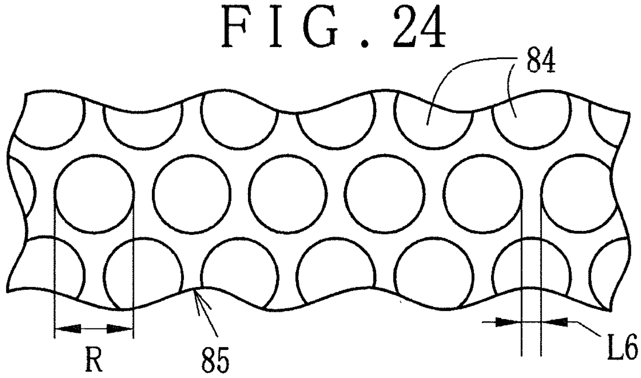
84
R
85
L6

FIG. 25

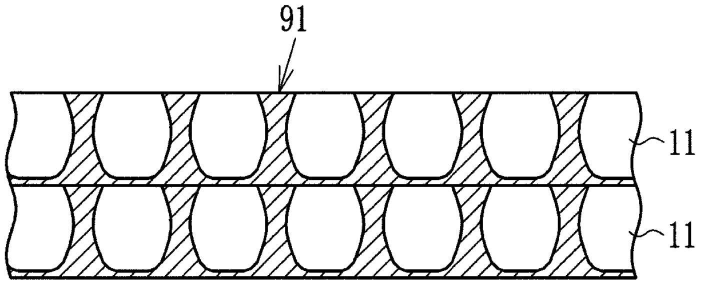


FIG. 26

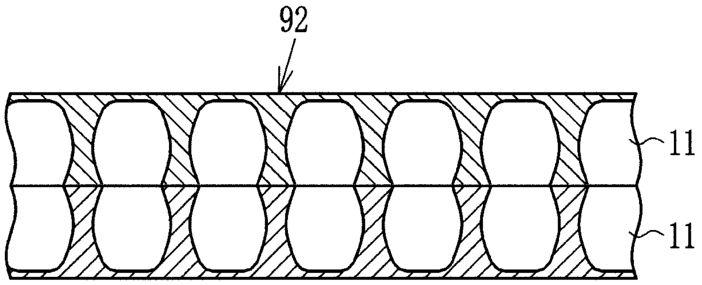


FIG. 27

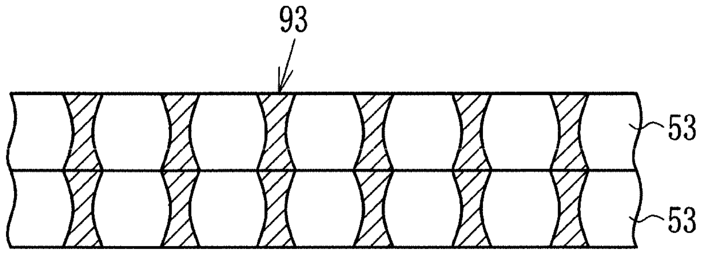

# FIG. 28

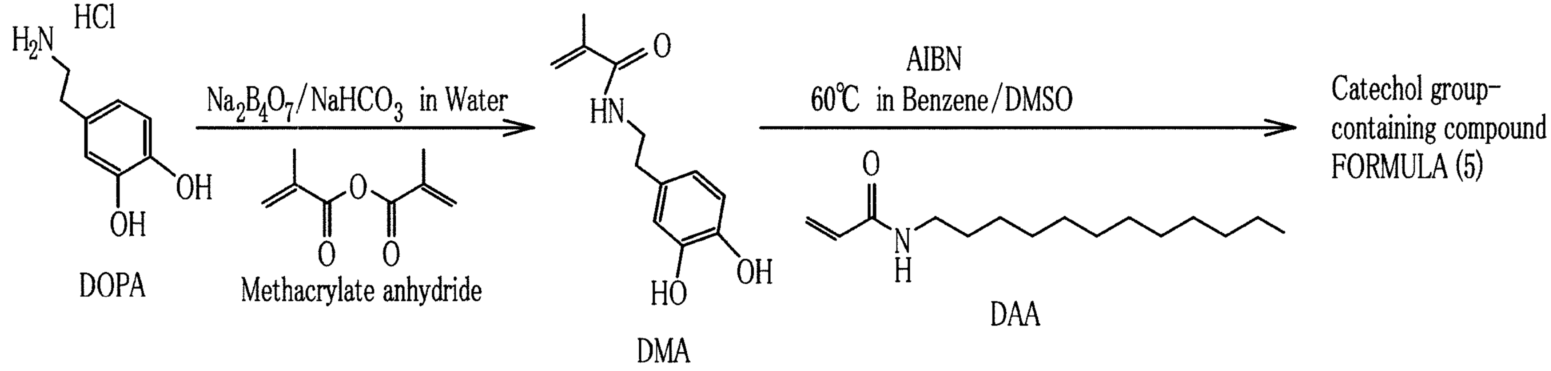


DOPA

Methacrylate anhydride

DMA

DAA

FIG. 29

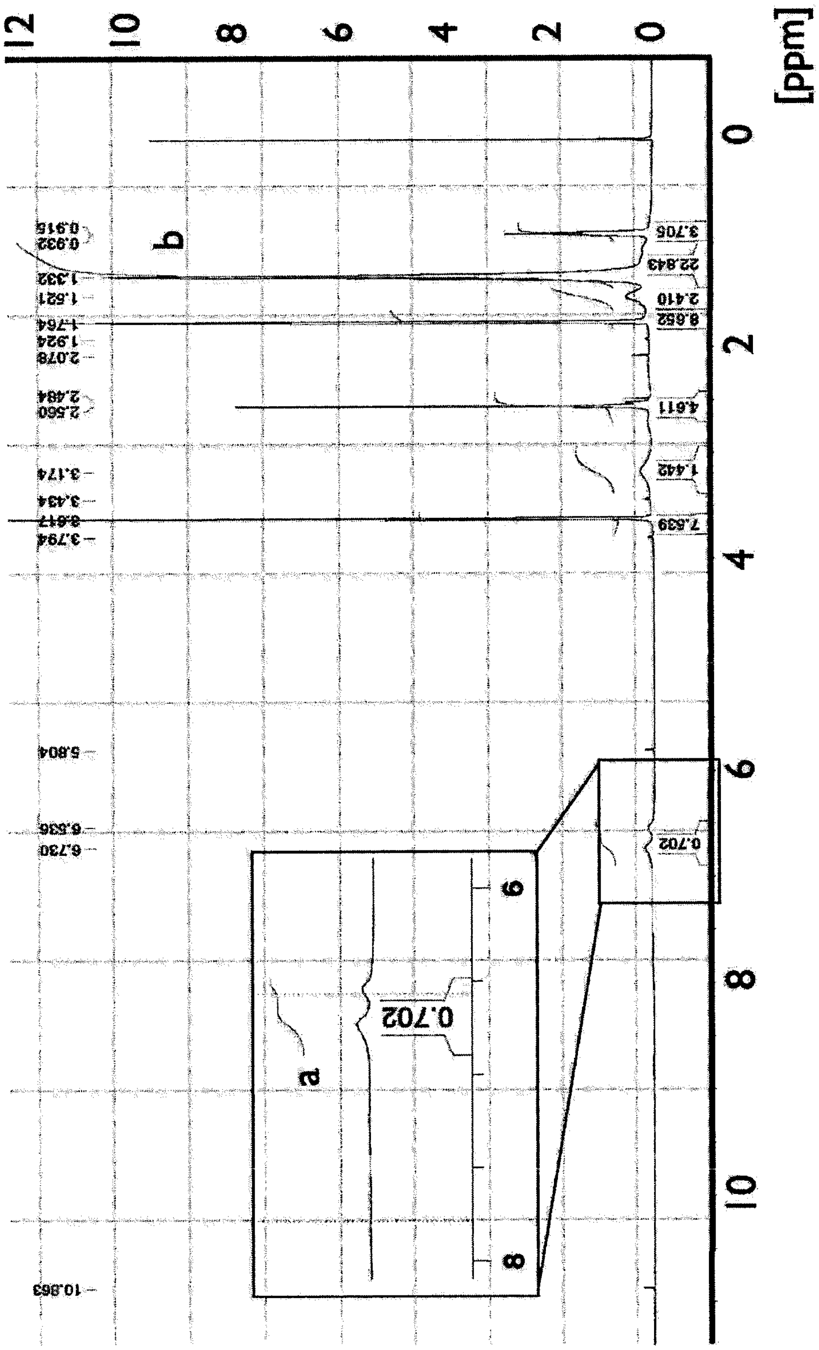

## INTERNATIONAL SEARCH REPORT

International application No.
PCT/JP2014/055077

A. CLASSIFICATION OF SUBJECT MATTER
*C08J5/18*(2006.01)i, *B29C41/24*(2006.01)i, *B29C59/00*(2006.01)i, *B32B3/12*(2006.01)i, *B32B3/30*(2006.01)i, *C08L101/00*(2006.01)i, *B29L7/00*(2006.01)n

According to International Patent Classification (IPC) or to both national classification and IPC

B. FIELDS SEARCHED

Minimum documentation searched (classification system followed by classification symbols)
C08J5/00-5/02, C08J5/12-5/22, B29C41/24, B29C57/00-59/18, B32B1/00-43/00, C08L101/00, C08J9/00-9/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| X<br>A | Yuta SAITO et al., "Catechol-ki Gan'yu Ryo-Shinbaisei Kobunshi ni yoru Hyomen Shushoku Titania Nano Ryushi o Mochiita Kaisoteki Takoshitsu Maku no Sakusei", Symposium on Macromolecules Yokoshu, 05 September 2012 (05.09.2012), vol.61, no.2, pages 4657 to 4658 | 1,3-8<br>2,9-14 |
| A | JP 2009-293019 A (Tohoku University), 17 December 2009 (17.12.2009), entire text (Family: none) | 1-14 |
| A | JP 2007-269923 A (Fujifilm Corp.), 18 October 2007 (18.10.2007), entire text (Family: none) | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 May, 2014 (09.05.14) | 20 May, 2014 (20.05.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/055077

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-173335 A (Fujifilm Corp.), 08 September 2011 (08.09.2011), entire text (Family: none) | 1-14 |
| A | JP 2011-202100 A (Fujifilm Corp.), 13 October 2011 (13.10.2011), entire text (Family: none) | 1-14 |
| A | JP 2007-1301 A (Fujifilm Holdings Corp.), 11 January 2007 (11.01.2007), entire text & US 2006/0266463 A1 & EP 1726613 A1 & CN 1869109 A | 1-14 |
| P,A | WO 2013/137260 A1 (Nanotheta Co., Ltd.), 19 September 2013 (19.09.2013), entire text (Family: none) | 1-14 |
| A | Hayao UCHIYAMA et al., "Dopamine o Fukumu Kobunshi Nano Sheet no Bunshi Level Secchakuzai eno Oyo", Symposium on Macromolecules Yokoshu, 05 September 2012 (05.09.2012), vol.61, no.2, pages 3826 to 3827 | 1-14 |
| A | Eiji WATANABE, "Igai na Banno Hyomen Shushokuho", Dojin News, 2007, no.125, page 12 | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011173335 A
- JP 2009293019 A
- JP 2007291367 A